(19) Europäisches Patentamt
European Patent Office
Office européen des brevets

(11) **EP 3 518 649 B1**

(12) **EUROPEAN PATENT SPECIFICATION**

(45) Date of publication and mention of the grant of the patent:
**16.12.2020 Bulletin 2020/51**

(21) Application number: **17781384.7**

(22) Date of filing: **29.09.2017**

(51) Int Cl.:
**A01B 79/00** (2006.01)   **A01B 69/04** (2006.01)

(86) International application number:
**PCT/DK2017/050322**

(87) International publication number:
**WO 2018/059647 (05.04.2018 Gazette 2018/14)**

(54) **A METHOD FOR DETERMINING PLACEMENT OF NEW OBSTACLES IN AN AGRICULTURAL FIELD**

VERFAHREN ZUM BESTIMMEN DER PLATZIERUNG NEUER HINDERNISSE IN EINEM LANDWIRTSCHAFTLICHEN FELD

PROCÉDÉ POUR DÉTERMINER LE PLACEMENT DE NOUVEAUX OBSTACLES DANS UN CHAMP AGRICOLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2016 DK PA201600573**

(43) Date of publication of application:
**07.08.2019 Bulletin 2019/32**

(73) Proprietor: **Agro Intelligence ApS**
**8200 Aarhus N (DK)**

(72) Inventors:
• **GREEN, Ole**
**6940 Lem (DK)**

• **EDWARDS, Gareth Thomas Charles**
**8000 Aarhus C (DK)**

(74) Representative: **Rasmussen, Martin Hoffgaard et al**
**Otello Law Firm**
**Dalgasgade 25, 8.**
**7400 Herning (DK)**

(56) References cited:
**US-A- 5 987 383       US-A1- 2005 273 253**
**US-A1- 2012 101 725   US-A1- 2014 324 345**

**Description**

**Field of the invention**

The present invention generally relates to the field of optimizing placement of obstacles in a field. More specifically the present invention relates in a first aspect to a method for determination of an optimized position and/or orientation of placement of a new obstacle in an agricultural field. In a second aspect the present invention relates to a computer program product, which is being adapted to perform the method of the first aspect. In a third aspect the present invention relates the use of a computer program product according to the second aspect for determination of an optimized position and/or orientation of placement of a new obstacle in an agricultural field.

**Background of the invention**

Within the specific field of agriculture relating to growing crops, it has been known for thousands of years that in order to optimize crop yield the field has to be proper prepared and maintained.

Accordingly, the field in which the crops are grown have to be prepared for seeding, then seeds have to be sown. During growth of the crops the field has to be fertilized and weeded and finally, when the crops have ripened, the crops are harvested.

All these preparation and maintenance operations, including harvesting will in a modern farming typically be performed using a motorized agricultural working vehicle, such as a tractor carrying or towing an implement, or the agricultural working vehicle may be self-propelled, such as it is know from harvesting machines. The documents US 2012/0101725 A1, US 2014/0324345 A1, US 2005/0273253 A1, and US 5,987,382 refer to methods and systems for determining a planned path of agricultural vehicles or working machines.

Many farmers will over time encounter interference from local or governmental legislators relating to situations where local or governmental legislators demand expropriation of a part of the farmer's field is due to the need of various kinds of infrastructural constructions involving privately own farm land.

Such infrastructural constructions may relate to laying out wind turbines, transformation stations, high voltage masts.

Other situations may relate to a compulsory laying out of ponds or creeks or the like due to environmental concerns, especially in relation to avoiding spreading of fertilizer nutrients into the ground water

In situations in which part of a farmer's field is to be subject to expropriation with the view to lay out one or more of such infrastructural obstacles or the like, there will often be some freedom in choosing the exact locations of such obstacles within the field.

Obviously, when working a field comprising a number of obstacles these obstacles will have to be avoided by the working vehicle.

Therefore, freedom in choosing the exact location of one or more obstacles may in turn allow for placing one or more new obstacles in one layout which, in terms of working the field with a working implement, will be more optimum than other layouts involving other or alternative locations of that obstacles.

When working farm land having one or more obstacles laid out in a non-optimized way in which the trajectory which is followed is not an optimum trajectory, excessive time consumption in the working operation, excessive area covered more than once, excessive fuel consumption and excessive wear on the working implement or machinery, or excessive travelling through the crops may result.

Accordingly there is a persistent need for optimizing the exact location of placement of one or more obstacles in a field when working an agricultural field using a working vehicle.

It is an objective of the present invention to provide systems, uses and methods for determining an optimized position and/or orientation of a new obstacle to be placed in an agricultural field.

**Brief description of the invention**

This objective is achieved by a computer program product according to the subject-matter of claim 1 and the use of the computer program product according to the subject-matter of claim 15.

The present invention in its various aspects allows for making intelligent decision upon placement of a new obstacle in an agricultural field. The intelligent decision making relates to finding a placement and orientation which in terms of economy is optimized, especially in terms of costs of working the field with an agricultural implement after the placement of that obstacle has taken place.

**Brief description of the figures**

Fig. 1 - 21d are illustrations relating to Example 1 and how to mathematically manage to create possible continuous driving paths in an agricultural field and how to find an optimum driving oath amongst those possible continuous driving paths.

Fig. 22 illustrates the boundary of a field which is going to have a new obstacle placed according to the invention and as described in Example 2.

Fig. 23 illustrates the field of Fig. 22 overlaid with a grid of cells.

Fig. 24 illustrates the field of Fig. 22 overlaid with a grid of cells after having discarded certain cells.

Fig. 25 is a spatial map illustrating the direct obstacle placement cost as a function of position.

Fig. 26a-d illustrate examples of combinations of possible placements of the new obstacle on the one hand and direction of working rows on the other hand, as encountered upon practicing the present invention.

Fig. 27 illustrates the best subset of possible obstacle placements.

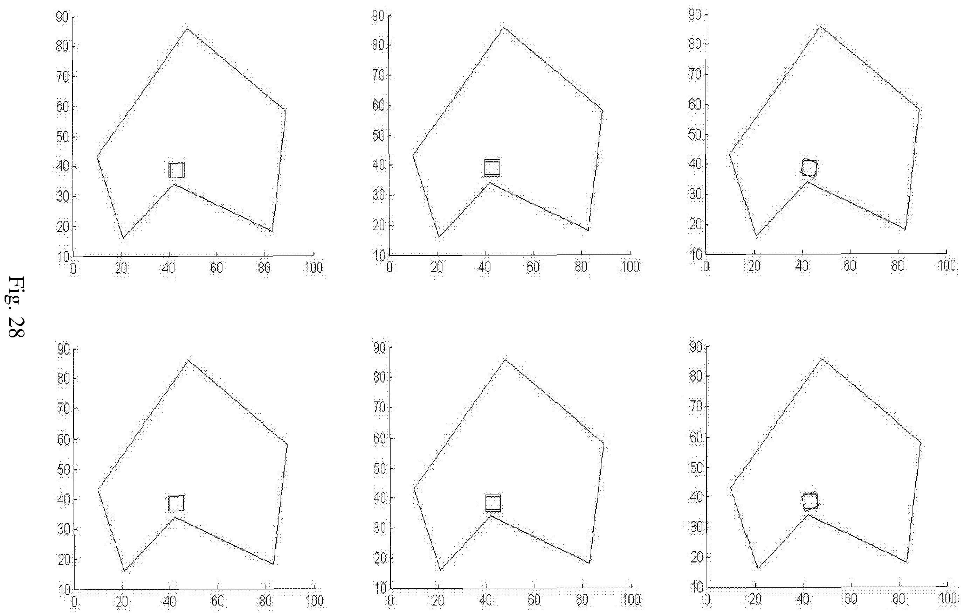

Fig. 28 illustrates six possible alternations relation to positions and orientations of a specific placement of an obstacle, which are to form basis of a new iteration of cost calculations.

Fig. 29 is a flow diagram illustrating one way of performing the present invention as exemplified in Example 2.

**Detailed description of the invention**

The present invention relates to a computer program product, which when loaded or operating on a computer, being adapted to perform a method for determination of an optimized position and/or orientation of placement of a new obstacle in an agricultural field; said method comprising the steps:

a) providing information relating to:

i) coordinates relating to the boundaries of said agricultural field; and
ii) coordinates relating to the boundaries of the ground shape of said new obstacle to be laid out in said field;

b) providing information relating to one or more capacity parameters relating to a specific working vehicle intended for working said field;
c) optionally providing information relating to the direct cost of the placing said new obstacle, as dependent on the specific position of placement thereof;
d) performing a calculation of an optimized position and/or orientation of placement of said new obstacle; wherein said optimized position and/or orientation of placement is being calculated on the basis of said information retrieved in step a) and step b) and step c).

The method is designed with the view to aid in making decisions in relation to placement and orientations of a new obstacle to be placed in a field. The method is especially aimed at optimization with the view to find the optimized position and/or orientation of placement based on the disadvantages of performing agricultural work in the field after the new obstacle has been placed.

An optimized position and/or orientation of a new obstacle shall be understood to mean that position and/or orientation which, compared to other position and/or orientation under investigation, is most efficient in terms of a cost parameter. An optimized position and/or orientation may or may not be a globally optimized position and/or orientation. In some instances an optimized position and/or orientation merely expresses an intelligent and qualified suggestion for a best position and/or orientation of a new obstacle to be placed in an agricultural field.

In a very special embodiment the method may further include the option of determining not only an optimized position and/or orientation of a new obstacle to be placed in an agricultural field, but the method may additionally or alternatively also include the option of determining an optimized shape of a new obstacle to be placed in an agricultural field.

Such a situation may be encountered e.g. in the event that a pond has to be placed in the field, such as for water draining purposes. Whereas it may be predetermined how large a surface area such a pond needs to have in order to be able to serve a desired magnitude of water draining capacity, the actual shape of such an obstacle may be of minor importance. However, the actual and final shape of such obstacle, once places, may turn out to have a significant impact of the economy of working the field having such new obstacle.

Therefore, great advantages are achieved in case the actual shape of a new obstacle, such as in the form of a pond or other types of obstacles, to be placed, can be optimized in view of the cost of the field operations necessary after the placement.

Accordingly, the method provides for determination of an optimized position and/or orientation of placement of a new obstacle in an agricultural field; or additionally or alternatively for determining an optimized shape of a new obstacle to be placed in an agricultural field. In one embodiment of the first aspect of the present invention step a) furthermore comprises providing information relating to:

iii) coordinates relating to the position of one or more entry/exit gates located at said boundary of said field; and/or
iv) coordinates relating to the boundaries of more or more obstacles already present within said agricultural field.

These inputs are inputs which in certain instances may be beneficial to take into consideration.

In one embodiment the capacity parameters of step b) independently comprising one or more of the following: effective working width of a representative working vehicle or implement, minimum turning radius of a representative working vehicle, fuel consumption of said working vehicle or implement.

These capacity parameters are relevant in the calculation of possible working paths to be followed in respect of a particular position and/or orientation of a new obstacle.

In one embodiment step d) involves calculating said optimized position of placement of said new obstacles analytically or numerically.

Analytically or numerically calculation strategies are two strategies which are particularly well suited in respect of the present invention.

In one embodiment the method involves suggestion of an array of possible positions and/or orientations of placement of said new obstacle, and wherein step d) involves calculating, in respect of each possible positions and/or orientations of placement of said new obstacle, an overall cost (OVC) for placement said new obstacle at said specific position and/or orientation of placement, wherein said optimized position and/or orientation of placement is being defined as that specific position and/or orientation of placement of said new obstacle which exhibits the lowest overall cost.

In the very special embodiment of the method in which additionally or alternatively also an optimized shape of a new obstacle to be placed in an agricultural field is determined, the above embodiment may involve suggestion of an array of possible shapes of the new obstacle, and wherein step d) involves calculating, in respect of each such shape of the new obstacle, an overall cost (OVC) for placement said new obstacle at said specific position and/or orientation and having that specific shape, wherein said optimized position and/or orientation of placement and/or shape of obstacle is being defined as that specific position and/or orientation of placement and/or shape of said new obstacle which exhibits the lowest overall cost.

In one embodiment said cost for placement of said new obstacle at said specific position of placement is defined as:

$$OVC = DC_P + OC_P - OC_0; \text{ or as } OVC = OC_P - OC_0$$

-wherein OVC being the overall cost; and
$DC_P$ being the direct cost for placement of said new obstacle at said specific position; and
$OC_P$ being the operational cost of working the field with the new obstacle positioned at that specific position of placement; and
$OC_0$ being the operational cost of working the field before or without the new obstacle is being positioned at that specific position of placement.

In some instances it is desired to include a direct cost for placement of said new obstacle into the calculations, whereas in other instances only the long term, operational cost of working the field with the new obstacle positioned at a specific position is of interest.

In one embodiment $OC_P$ and/or $OC_0$ independently being found by defining an array of possible working paths for the vehicle to follow and calculating in respect of each possible working path of said array, an efficiency parameter in respect in respect of each said possible working path, wherein $OC_P$ and/or $OC_0$ independently being defined as that specific working path, of the array of possible working path, exhibiting the highest efficiency.

In one embodiment $OC_P$ and/or $OC_0$ independently being found by the following steps:

i) approximating the boundary of the field to a boundary polygon; and approximating the boundary of the ground shape of the new obstacle to be placed in said field to a new obstacle polygon; and by approximating the boundary of any existing obstacle already located in said field to an existing obstacle polygon;
ii) defining one or more headlands located immediately within said boundary polygon;
iii) defining one or more headlands surrounding any existing obstacle polygon, if present;

iv) defining a headland surrounding said new obstacle polygon, if present;

v) define a work area which comprises any area of the field which does not belong to a headland or an obstacle;

vi) define an array of possible working row orientations, each possible working row orientation being parallel to the orientation of a headland;

vii) within the work area and in respect of each working row orientation within the array of possible working row orientations, define an array of parallel working rows;

viii) in respect of each array of parallel working rows, construct an array of possible continuous working paths by connecting working rows with headlands or part of headland, wherein each said possible continuous working path is covering all working area and all headlands;

ix) in respect of continuous working paths found in step xiii) calculate an efficiency parameter, expressing the efficiency in following that specific continuous working path;

x) define as $OC_P$ and/or $OC_0$ that specific continuous working path exhibiting the highest efficiency.

This method is a clever and simple method of determination of $OC_P$ and/or $OC_0$.

In one embodiment of this embodiment the headland defined in step iii) and/or independently) the headland defined in step iv) includes a safety offset area.

Including a safety offset area surrounding said obstacle polygon will enhance safety when operating the work vehicle or implement as collision hazards will be reduced this way.

In one embodiment the width of the headland being defined in step ii), iii) and/or step iv) independently corresponds to the effective working with of a representative work vehicle or implement.

In one embodiment the width of the working rows as defined in step vii) corresponds to the effective working with of a representative work vehicle or implement.

It is beneficial to create working paths having widths corresponding to the effective working width of the work vehicle or working implement.

In one embodiment the suggestion of an array of possible positions of placement of said new obstacle involves the following steps:

1) defining a rectangular bounding box having a magnitudes of width and a height adapted to said new obstacle to be placed on said field in such a way that said obstacle touches all four sides of said bounding box;

2) defining a grid of cells overlaying said agricultural field;

3) discarding from the grid any cell which is partly or completely outside the boundary of said agricultural field, thus leaving behind only those cells located fully within boundary of said agricultural field; and thereby defining an array of possible positions of said new obstacle to be placed in said field; each remaining cell defines such a possible position.

4) in respect of each possible position in the an array of possible positions obtained, calculate the overall cost (OVC) for placing said new obstacle in that specific possible position;

5) in respect of each possible position of the new obstacle in the an array of possible positions, modify the position or orientation of said obstacle so as to obtain a new array of possible positions and/or orientations of the new obstacle;

6) in respect of each possible position or orientation in the new array of possible positions or orientations, as defined in step 6), calculate the overall cost (OVC) for placing said new obstacle in that specific possible position or orientation;

7) iteratively repeating steps 4), 5) and 6);

8) define as the optimized placement and orientation of the new obstacle as that placement and orientation exhibiting the lowest overall cost (OVC).

These process steps present a simple and clever way of iteratively finding an optimized position and/or orientation of the new obstacle to be placed on a field.

In the very special embodiment of the method in which additionally or alternatively also an optimized shape of a new obstacle to be placed in an agricultural field is determined, the above embodiment may involve the further additional features:

In step 4) and in respect of each possible shape of the obstacle in the an array of possible shapes of obstacle obtained, calculate the overall cost (OVC) for placing said new obstacle having that specific shape; in step 5) also the shape of the obstacle may be modified; in step 6) the overall cost (OVC) is being calculated in respect of each possible position and/or orientation of placement and/or shape of said new obstacle in said array of possible positions, orientations and/or shapes of said new array of obstacle position, orientations and/or shapes; and in step 8), the optimized placement and/or orientation and/or shape of the new obstacle is being defined as the placement and/or orientation and/or shape of the new obstacle which exhibits the lowest overall cost (OVC).

In one embodiment of this embodiment each cell of the grid of cells is having a width and a height corresponding to the width and height, respectively, of said bounding box.

In one embodiment the modification of the position or orientation as defined in step 5) is selected from the group comprising:

- a translational movement of the new obstacle in a direction parallel to the width of the bounding box in one direction;
- a translational movement of the new obstacle in a direction parallel to the width of the bounding box in the opposite direction;
- a translational movement of the new obstacle in a direction parallel to the height of the bounding box in one direction;
- a translational movement of the new obstacle in a direction parallel to the height of the bounding box in the opposite direction;
- a rotation of the new obstacle in one direction;
- a rotation of the new obstacle in the opposite direction.

In one embodiment the translational movement of the new obstacle in a direction parallel to the width of the bounding box is having a magnitude of 0.01 - 0.5, such as 0.05 - 0.4, for example 0.1 - 0.3 of the width of the bounding box.

In one embodiment the translational movement of the new obstacle in a direction parallel to the height of the bounding box is having a magnitude of 0.01 - 0.5, such as 0.05 - 0.4, for example 0.1 - 0.3 of the height of the bounding box.

In one embodiment the rotation of the new obstacle is having a magnitude of 0.01 - 0.5*pi, such as 0.05 - 0.4*pi, for example 0.1 - 0.3*pi.

In one embodiment step 5) of said method is followed by step 5a):

in case the bounding box corresponding to a modified possible position or orientation of said new obstacle is arranged partly or completely outside the boundary of said agricultural field, said modified possible position or orientation of said new obstacle is discarded.

In one embodiment step 4) of said method is followed by step 4a):

rank the possible positions of the new obstacle in relation to overall cost and discard a part of the possible positions within the array of possible position exhibiting the highest overall cost (OVC).

In the very special embodiment of the method in which additionally or alternatively also an optimized shape of a new obstacle to be placed in an agricultural field is determined, the above embodiment may involve the further additional feature of step 4a) comprising:

rank the possible shapes of the new obstacle in relation to overall cost and discard a part of the possible shapes within the array of possible shapes exhibiting the highest overall cost (OVC).

In one embodiment step 6) of said method is followed by step 6a):

rank the possible positions and orientations of the new obstacle in relation to overall cost and discard a part of the possible positions or orientations within the array of possible position exhibiting the highest overall cost (OVC).

In the very special embodiment of the method in which additionally or alternatively also an optimized shape of a new obstacle to be placed in an agricultural field is determined, the above embodiment may involve the further additional feature of step 6a) comprising:

rank the possible shapes of the new obstacle in relation to overall cost and discard a part of the possible shapes within the array of possible shapes exhibiting the highest overall cost (OVC).

In one embodiment the method involves independently discarding those possible positons or orientations, as the case may be, which are ae those 40 - 90%, such as those 50 - 80%, such as 60 - 70% exhibiting the highest overall cost (OVC).

In the very special embodiment of the method in which additionally or alternatively also an optimized shape of a new obstacle to be placed in an agricultural field is determined, the above embodiment may involve the further additional feature of independently discarding those possible shapes of the new obstacle, which are those 40 - 90%, such as those 50 - 80%, such as 60 - 70% exhibiting the highest overall cost (OVC).

The above details of the iterative process provides for optimization of the position and/or orientation of the new obstacle to be placed in the field in an efficient way.

In one embodiment said method involves creating a number N of possible positions and/or orientations of possible placements of a new obstacle in said field, each with an associated assigned cost parameter, and wherein said number N being an integer in the range 1,000 - 700,000 or more, for example 2,000 - 600,000, such as 5,000 - 500,000, e.g. 10,000 - 400,000, such as 50,000 -300,000 or 100,000 - 200,000 possible positions and/or orientations of possible placements of a new obstacle.

In the very special embodiment of the method in which additionally or alternatively also an optimized shape of a new obstacle to be placed in an agricultural field is determined, the above embodiment may involve the further additional feature of creating a number N of possible shapes of a new obstacle in said field, each with an associated assigned cost parameter, and wherein said number N being an integer in the range 1,000 - 700,000 or more, for example 2,000 - 600,000, such as 5,000 - 500,000, e.g. 10,000 - 400,000, such as 50,000 -300,000 or 100,000 - 200,000 possible shapes of a new obstacle.

In one embodiment said method involves finding said optimized position and/or orientation by means of a heuristic method, such as a greedy heuristic method, a tabu search solver, an ant colony solver, a genetic algorithm. Such heuristic method will reduce the amount of data processing necessary in the optimization method.

In the very special embodiment of the method in which additionally or alternatively also an optimized shape of a new obstacle to be placed in an agricultural field is determined, the above embodiment may involve finding said optimized shape of the new obstacle by means of a heuristic method, such as a greedy heuristic method, a tabu search solver, an ant colony solver, a genetic algorithm.

In one embodiment said optimization involved in said method is based on minimizing total operational time when working the field; total productive time for working the field; total fuel consumption for working the field; total non-working distance for working the field; total area covered twice or more.

In the present description and in the appended claims it shall be understood that a computer program product may be presented in the form of a piece of software which is storable or stored on a piece of hardware. Hereby, the computer program product may be embodied in one or more computer readable storage media as a computer readable program code embodied thereon. Accordingly, the computer program product may be presented as a computer-readable storage medium having a computer program product embodied therein.

The computer program code is configured for carrying out the operations of the method and it may be written in any combination of one or more programming languages.

The present invention relates also to the use of a computer program product according to the invention for optimizing the position and/or orientation of placement of a new obstacle in an agricultural field.

It should be noted that although the present invention has been illustrated in terms of optimizing the placing a single new obstacle, the present invention in its various aspects equally well applies optimization of placement of the position and/or orientation of two or more new obstacles, such as 2 or more or 5 or more new obstacles.

## Examples

### Example 1

This example is intended for illustrating one way of mathematically processing situation of having a boundary of a field having located there in a number of obstacles in order to create an array of possible working rows and headlands within that field which may be connected in various ways in order to create an array of possible continuous working paths to be followed.

In doing this an efficiency parameter may be assigned and calculated in respect of possible continuous working path and the most efficient continuous working path can be selected among the array of possible continuous working paths.

The principle set out in this example relies on the following steps:

1. Define the boundary of the field.

2. Define the boundary of any obstacle.

3. Approximate the boundary of the field to a boundary polygon.

4. Approximate the boundary of any obstacle to an obstacle polygon.

5. Define one or more headlands arranged immediately within the boundary polygon.

6. Define one or more headlands surrounding any obstacle polygon.

7. Define a work area which comprises parts of the field which does not belong to a headland or an obstacle.

8. Within the work area, define different arrays of parallel working rows, wherein in respect of each array of parallel working rows, these working rows are being parallel to one of the headlands.

9. In respect of each array of parallel working rows, connect in various ways working rows and headlands so as to create an array of possible continuous working paths.

10. Define a cost parameter and calculate in respect of all possible continuous working paths the total cost of following that specific continuous working path.

11. Present as the most optimum working path, that specific continuous working path exhibiting the lowest overall total cost.

Field Definition

In the calculation of the present example the following inputs are needed.

- Defined Field Boundary
- Defined Obstacle Boundary
- Defined Field Gates
- Vehicle working width
- Vehicle turning radius
- Specified number of headlands

Processing steps

Field Definition

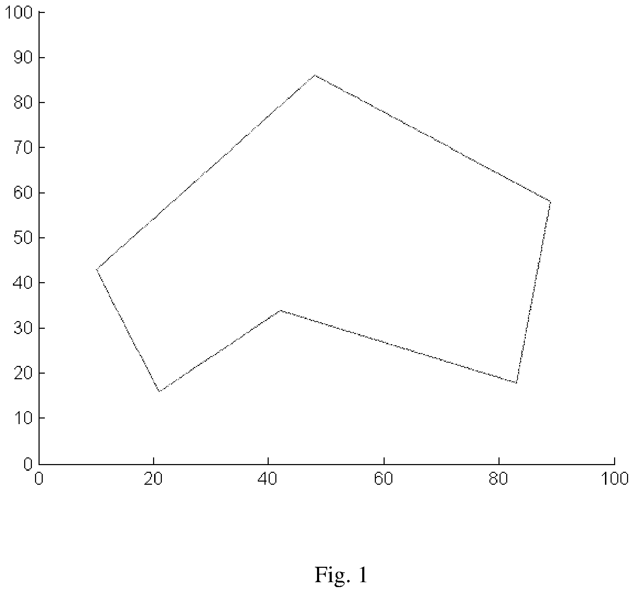

The field is described by the field boundary which is a polygon consisting of n points. In Fig. 1 the polygon P consists of 6 point ($P_1$,...,$P_6$). The points of P are ordered such that they are in a clockwise orientation. P = ([10,43],[48,86],[89,58],[83,18],[42,34],[21,16])

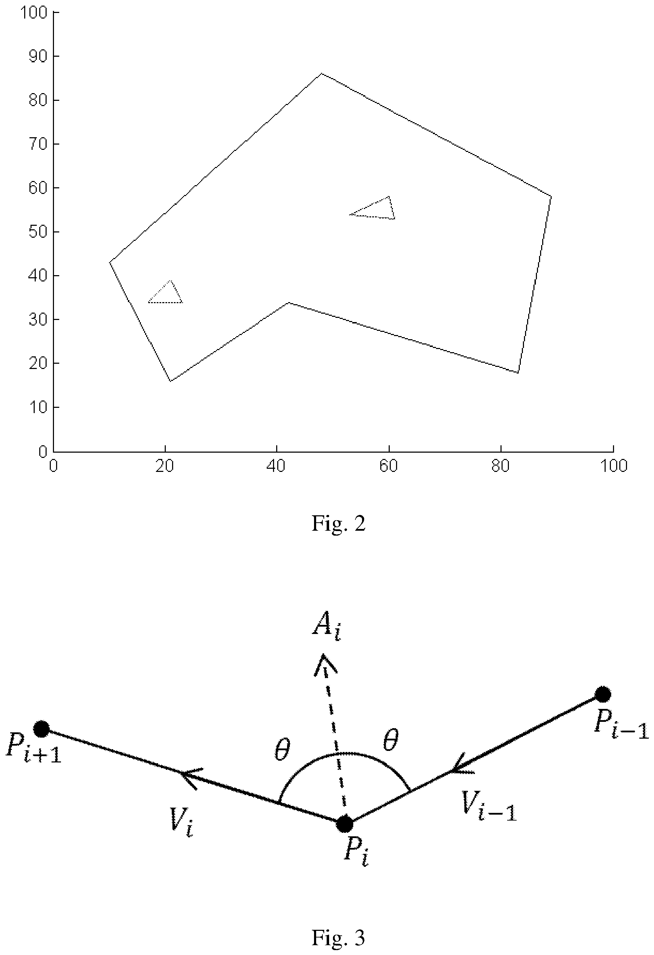

Within the boundary there are a number of obstacles. The obstacles the obstacles are described by a boundary. This may be the physical edge of the obstacle or it may also include a "safety offset" to ensure working vehicles remain a safe distance away. In Fig. 2 the obstacles are described as polygons ($O^1$,$O^2$) with points ($O^1_1$, ..., $O^1_3$) and ($O^2_1$,...,$O^2_3$). The points of the obstacles are ordered such they are in an anti-clockwise orientation. $O^1$ = ([23,34],[21,39],[17,34]), and $O^2$ = ([60,58],[53,54],[61,53])

A number of gates are defined for the field. These are entry/exit point for the field and are located on the field boundary. In the example there is one gate $G^1$ =[83,18].

The working width is the effective working width of the agricultural machine or implement. The turning radius is minimum radius the vehicle can turn. For a standard two axle vehicle with one axle steering it can be calculated by dividing the distance between the front and rear axles of the vehicle by the tangent of the maximum angle of the steering axle.

Creating the headlands

The headlands are areas which encompass the field boundary and the surround the obstacle. These areas are used by the vehicle to more easily manoeuvre in the field. The number of headlands required to safely operate in a field is the integer greater than 2*turning radius divided working width. The headlands have an outer boundary and an inner boundary. For the first headland areas the outer boundary is the boundary of the field or the obstacle and the inner boundary plotted such that the area between the outer boundary and inner boundary has a width equal to the working width. For subsequent headlands, the outer boundary is the inner boundary of the previous headland.

To calculate the headland areas the boundary of the field and the boundary of each obstacle are expressed as a set consisting of 3 arrays {$P,V,A$}, where P is the array of corner points of the boundary, V is the array of vertices linking the corners of the boundary and A is the array of vectors at the apex of each boundary point.

$$V_i = P_{i+1} - P_i : i = 1 \dots p - 1$$

$$V_p = P_1 - P_p$$

$$\frac{A_i \cdot -V_{i-1}}{|A_i||V_{i-1}|} = \cos\theta = \frac{A_i \cdot V_i}{|A_i||V_i|}, \quad \frac{A_i \cdot [V_{i,y} \quad -V_{i,x}]}{|A_i||V_i|} < \frac{A_i \cdot [-V_{i,y} \quad V_{i,x}]}{|A_i||V_i|}$$

$$|A_i| = \frac{1}{\sin\theta}$$

This is illustrated in Fig. 3.

The constrain on Ai ensures that the Ai vector always points to the right of the Vi vector. See <fig. 3.

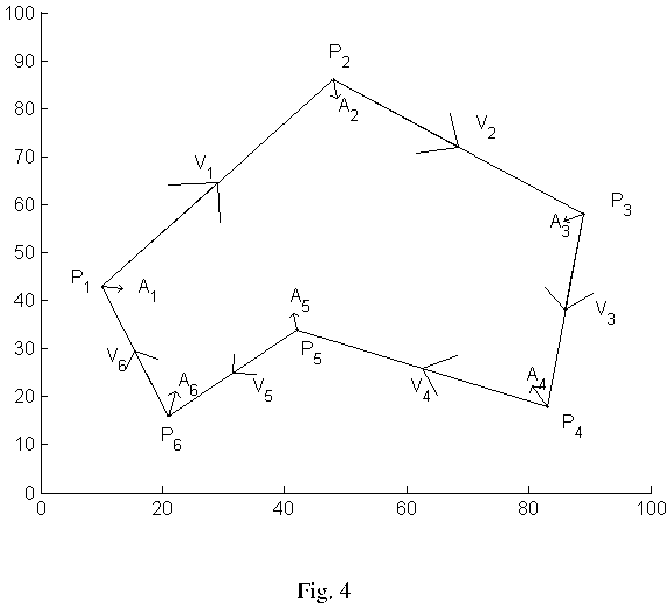

In Fig. 4 the P,V, and A arrays are labelled for the field boundary. In the example for the field boundary V = ([38,43],[41,-28],[-6,-40],[-41,16],[-21,-18],[-11,27]) and A = ([1.16,-0.20],[0.16,-1.32],[-1.08,-0.47],[-0.80,1.39],[-0.2,1.15],[0.40,1.66]).

To create the inner boundary, the corners of the outer boundary are projected along the apex vector, so that they maintain an equal perpendicular distance from the two vectors creating the corner. Therefore for a distance $\lambda$ a new boundary can be created as a new set of point $P'$.

$$P'_i = P_i + \lambda * A_i \; : \; i = 1, \dots, p$$

V' and A' can then be created using the above equations.

There are 3 cases which must be monitored when creating the new boundary. The 3 cases are a self-corner interception, a self-edge interception and a 2 polygon interception.

Case 1:

The self-corner interception occurs when two adjacent apex vectors intersect, resulting in $V'$ to have a zero length and Pi = $P_{i+1}$. Therefore for each P there is a value, $\alpha$, where this happens.

$$P'_i = P_i + \alpha_i * A_i = P_{i+1} + \alpha_i * A_{i+1} = P'_{i+1} \; : \; i = 1 \dots p - 1$$

$$P'_1 = P_1 + \alpha_p * A_1 = P_p + \alpha_p * A_p = P'_p$$

$$\alpha_i = \frac{P_{i+1} - P_i}{A_i - A_{i+1}} : i = 1 \dots p - 1$$

$$\alpha_p = \frac{P_1 - P_p}{A_p - A_1}$$

$$\alpha_n = min\{\alpha_i\}: \alpha_i > 0, \qquad i = 1 \dots p$$

If a self-corner interception occurs $P'_i$ is removed from $P'$, and $V'$ and $A'$ are recalculated.

For the example of the field boundary the $\alpha$ = [38.34,36.76,40.9,36.89,160.54,14.89]. Therefore $\alpha_n$ = 14.89. Since O1 and O2 are both triangles with the points arrange in an anti-clockwise orientation it is impossible a self-corner interception to occur.

Case 2:

The self-edge interception occurs when an apex vector intersects a vertex between two points.

$$P'_i = P'_j + b * V'_j \; : \; i, j = 1, \dots p; i \neq j, 0 < b < 1$$

Therefore for each pair of point Pi and Pj there is a value, $\beta_{ij}$, where this occurs.

$$\beta_{ij} = \frac{P_{j+1} - P_j - P_i}{A_i + A_j - A_{j+1}} : i = 1 \dots p, j = 1 \dots p - 1, i \neq j, i \neq j + 1$$

$$\beta_{ip} = \frac{P_1 - P_p - P_i}{A_i + A_p - A_1} : i = 1 \dots p - 1$$

$$\beta_{nm} = min\left\{min\{\beta_{ij}\}_j\right\}_i : i = 1 \dots p, j = 1 \dots p, \beta_{ij} > 0$$

If a self-edge interaction occurs then P' is split into two subsets, $^1P'$ and $^2P'$ and V' and A' are recalculated.

$$P'_i = P_i + \beta_{nm} * A_i : i = 1 \dots p$$

$$^1P' = \{P'_1, \dots, P'_n, P'_{m+1}, \dots, P'_p\}, \quad ^2P' = \{P'_n, \dots, P'_m\} \quad if \quad n < m$$

$$^1P' = \{P'_1, \dots, P'_m, P'_n, \dots, P'_p\}, \quad ^2P' = \{P'_{m+1}, \dots, P'_n\} \quad if \quad n > m$$

For the example field $\beta_{ij}$ is describing in the Table 1 below.

**Table 1**

| j\i | 1 | 2 | 3 | 4 | 5 | 6 |
|---|---|---|---|---|---|---|
| 1 | - | 38.24 | 32.79 | -4.22 | 16.76 | - |
| 2 | - | - | 29.96 | 23.26 | 19.23 | 38.18 |
| 3 | 23.21 | - | - | 41.13 | 39.04 | 43.31 |
| 4 | 28.25 | 21.46 | - | - | 46.61 | 47.95 |
| 5 | 18.55 | 22.46 | 36.84 | - | - | 69.48 |
| 6 | 14.50 | 28.13 | 47.40 | 35.48 | - | - |

Therefore $\beta_{nm}$ = 14.50, n = 1, m = 6. Again since O1 and O2 are both triangles and therefore only have 3 points it is impossible a self-edge interception to occur.

Case 3:

The 2 polygon interception occurs when two polygon sets, such as a field boundary and an obstacle boundary intercept. NB if two polygons are created due to case 2 these two polygon it is impossible that these two polygons can intercept.

$$^{gh}\gamma_{ij} = \frac{^hP_j - {}^hP_{j+1} - {}^gP_i}{^gA_i + {}^hA_j - {}^hA_{j+1}} : \quad i = 1 \dots {}^gp, j = 1 \dots {}^hp - 1, \quad g, h = 1, \dots N, g \neq h$$

Where N, is the number of active sets describing polygons.

$$^{kl}\gamma_{nm} = min\left\{min\left\{min\left\{min\{^{gh}\gamma_{ij}\}_j\right\}_i\right\}_h\right\}_g$$

If a 2 polygon interception occurs the two polygons become merged together to form a new polygon, with the original two polygons being removed.

$$ {}^gP_i' = {}^gP_i + {}^{kl}\gamma_{nm} * {}^gA_i : i = 1 \dots {}^gp, g = 1, \dots N $$

$$ P = \left\{ {}^kP_1, \dots, {}^kP_n, {}^lP_{m+1}, \dots {}^lP_{h_p}, {}^lP_1, \dots, {}^lP_m, \dots, {}^kP_n, \dots, {}^kP_{g_p} \right\} $$

For the example with the field with the field boundary being ${}^1P$, and the obstacles $O_1$ and $O_2$ being ${}^2P$ and ${}^3P$ respectivly then ${}^{gh}\gamma_{ij}$ is described by Table 2

**Table 2**

| h\g | | 1 | | | | | | 2 | | | 3 | | |
|---|---|---|---|---|---|---|---|---|---|---|---|---|---|
| | j\i | 1 | 2 | 3 | 4 | 5 | 6 | 1 | 2 | 3 | 1 | 2 | 3 |
| 1 | 1 | | | | | | | 2219 | 5.46 | - | - | 17.13 | 525.1 |
| | 2 | | | | | | | 31.77 | - | 160 | 13.56 | 106.3 | - |
| | 3 | | | | | | | 32.19 | - | - | - | - | 13.20 |
| | 4 | | | | | | | 40.43 | 124.6 | - | 76.56 | 14.05 | - |
| | 5 | | | | | | | 23.38 | - | - | 125.2 | 10.02 | - |
| | 6 | | | | | | | - | - | 6.76 | 70.31 | 15.43 | - |
| 2 | 1 | - | - | - | - | 4.54 | - | | | | - | 123.4 | 162.5 |
| | 2 | 5.22 | - | - | - | - | - | | | | - | - | - |
| | 3 | - | - | - | - | - | 0.93 | | | | - | - | - |
| 3 | 1 | - | 6.09 | - | - | - | - | - | - | - | | | |
| | 2 | 8.56 | - | - | - | - | - | 8.58 | 15.10 | - | | | |
| | 3 | - | - | 11.17 | - | - | - | - | - | - | | | |

Therefore ${}^{kl}\gamma_{nm} = 0.93$, k = 1, l = 2, n = 6, m = 3.

To create the inner boundary of the headlands for a field boundary, with or without in field objects, an iterative algorithm is used. The algorithm limits the accumatled distance moved to be no larger than the sort after working width.
W = working width
While (W>0)

Calculate $\alpha_n$, $\beta_{ij}$, and ${}^{gh}\gamma_{ij}$, where approirate

$$ \lambda = min\{\alpha_n, \beta_{nm}, {}^{kl}\gamma_{nm}, W\} $$

Calculate P',V',A' using $\lambda$

$$ W = W - \lambda $$

End while
For the example, if a working width of 3 is used, the iteration of the loop is,

$$ \lambda = min\{\alpha_n, \beta_{nm}, {}^{kl}\gamma_{nm}, W\} = min\{14.89, 14.50, 0.93, 3\} = 0.93 $$

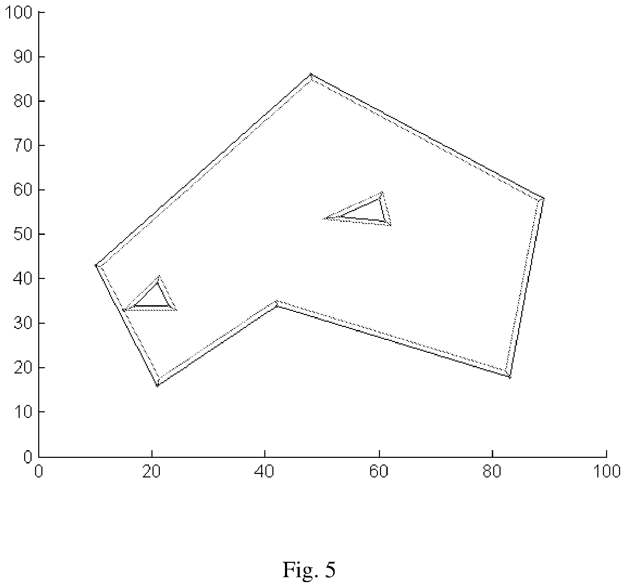

This means that the first interception to occur is the 2 polygon interception between the field boundary and the first obstacle. The field boundary and the first obstacle then become merged together and the process continues. See Fig. 5

At the next iteration of the loop, P is now ([24.38,33.07],[21.27,40.84],[15.06,33.07],[ 11.08,42.82],[48.15,84.76],[87.99,57.56],[82.25,19.30],[41.82,35.07],[21.38,17.55],[ 15.06,33.07]) and $O_2$ is now ([60.66,59.45],[50.10,53.42],[62.17,51.91]).

The new interceptions are as follows

$\alpha$ = [-,-,4.53,37.25,20.58,66.52,34.19,5.83,915.86]. Therefore $\alpha_n$ = 4.53  $\beta_{ij}$

| j\i | 1 | 2 | 3 | 4 | 5 | 6 | 7 | 8 | 9 | 10 |
|---|---|---|---|---|---|---|---|---|---|---|
| 1 | - | - | - | - | - | - | - | 3.61 | - | - |
| 2 | - | - | - | 4.29 | - | - | - | - | - | - |
| 3 | - | - | - | - | - | - | - | - | - | - |
| 4 | 2219 | - | - | - | - | - | - | - | - | - |
| 5 | 30.84 | - | - | - | - | - | 22.36 | - | 37.25 | - |
| 6 | 31.27 | - | 35.22 | - | - | - | - | - | 35.22 | - |
| 7 | 39.51 | - | 46.73 | - | - | - | - | - | 46.73 | - |
| 8 | 22.45 | - | 34.19 | 14.76 | - | - | - | - | - | - |
| 9 | - | - | - | - | - | - | - | - | - | - |
| 10 | - | - | - | - | - | - | - | - | - | - |

$^{gh}\gamma_{ij}$

| h\g | | 1 | | | 2 | | | | | | | | | | |
|---|---|---|---|---|---|---|---|---|---|---|---|---|---|---|---|
| | j\i | 1 | 2 | 3 | 1 | 2 | 3 | 4 | 5 | 6 | 7 | 8 | 9 | 10 |
| 1 | 1 | | | | - | - | - | - | 5.16 | - | - | - | - | - |
| 1 | 2 | | | | 7.65 | - | 9.78 | 7.63 | - | - | - | - | - | - |
| 1 | 3 | | | | - | - | - | - | - | 10.24 | - | - | - | - |
| 2 | 1 | - | 122.50 | 161.5 | | | | | | | | | | |
| 2 | 2 | - | - | - | | | | | | | | | | |
| 2 | 3 | - | - | - | | | | | | | | | | |
| 2 | 4 | - | 16.20 | 524.2 | | | | | | | | | | |
| 2 | 5 | 12.63 | 105.3 | - | | | | | | | | | | |
| 2 | 6 | - | - | 12.27 | | | | | | | | | | |
| 2 | 7 | 75.63 | 13.12 | - | | | | | | | | | | |
| 2 | 8 | 124.2 | 9.09 | - | | | | | | | | | | |
| 2 | 9 | 69.38 | 14.51 | - | | | | | | | | | | |
| 2 | 10 | - | 127.7 | 190.2 | | | | | | | | | | |

$$\lambda = min\{\alpha_n, \beta_{nm}, {}^{kl}\gamma_{nm}, W\} = min\{4.53, 4.29, 5.16, 2.07\} = 2.07$$

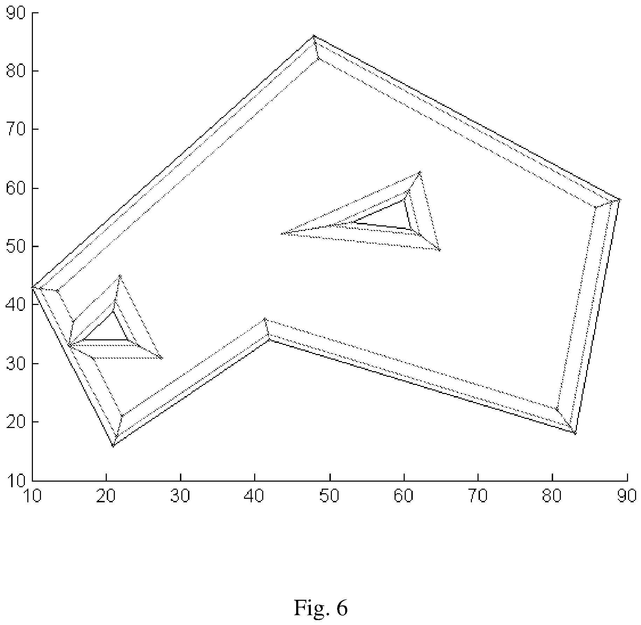

Since W is now smaller than the other parameters there is no need to do a third iteration, as W = 0 in the next iteration. Therefore the resultant polygons are {[27.43,31], [21.87,44.89], [15.64,37.1], [13.48,42.41], [48.49,82.03], [85.75,56.58], [80.59,22.16], [41.41,37.45], [22.21,20.99], [18.13,31], [62.12,62.67], [43.70,52.14], [64.76,49.51]}}. See Fig. 6.

If multiple headland passes are required then the resultant polygons are used as the outer boundaries of the next set of headlands. This method will be know as movePolygonSet and it will need a set of polygons and a distance to generate a new set of polygons, such that.

$$movePolygonSet\left(\left\{\,^1P,\dots,\,^NP\right\},W\right) \Rightarrow \left\{\,^1P',\dots,\,^MP'\right\}$$

It shoud be noted that in case any obstacle is not from the outset defined by a boundary being a polygon, that obstacle is approximated to an obstacle polygon and the headland around that obstacle is defined relative to that obstacle polygon.

Working rows

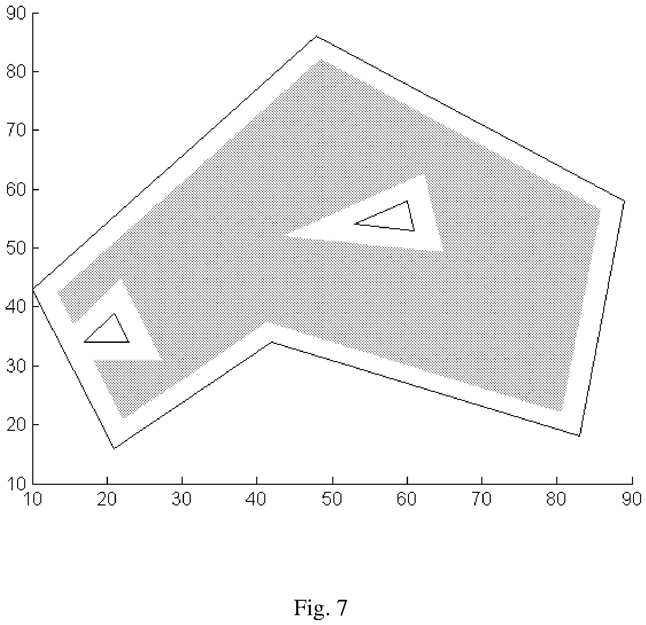

After all of the headlands have been calculated the area remaining inside of the field boundary and outside of any remaining obstacles is considered the working area. See Fig. 7.

For the example one of the obstacles became integrated with the headland while the other remained separate. The outer boundary of the working area is P = {[27.43,31],[21.87,44.89],[15.64,37.1],[13.48,42.41],[48.49,82.03],[85.75,56.58],[80.59,22.16],[ 41.41,37.45],[22.21,20.99],[18.13,31]} and the hole created by the remaining obstacle is $H^1$ = {[62.12,62.67],[43.70,52.14],[64.76,49.51]}

The working rows are plotted as parallel rectangles across the working area, which have a width equal to the working width of the vehicle. The working rows are parallel to the driving direction of the field. Theoretically this could be any direction, which would give an infinite set of possible directions. However to simplify the calculation a limited set of directions parallel to all the edges of the remaining work area (both from the inside and outside) is used.

For the example the set of possible driving direction D ={ [-0.38,0.93], [-0.62,-0.78], [-0.37,0.93], [0.66,0.75], [0.83,-0.56], [-0.15,-0.99], [-0.93,0.36], [-0.76,-0.65], [-0.38,0.93], [1,0], [-0.87,-0.5], [0.99,-0.12], [-0.2,0.98]}.

The working rows are calculated between two parallel lines, $L^i$ and $R^i$. These are the bounding left and right sides, respectively, of the working row. $L^i$ is defined as a straight line between the points $L_1^i$ and $L_2^i$, and $R^i$ is defined as a straight line between $R_1^i$ and $R_2^i$. The first left side $L^1$ starts at the furthest most left point of the boundary, with respect to the driving direction, and extends from the furthest most back point, $L_1^1$, to the furthest most forward point, , $L_2^1$, with respect to the driving direction, of the boundary. The first right side $R^1$ is the transposition of $L^1$ a distance equal to the working width to the right, with respect to the driving direction.

$$\alpha_1 = min\{DD \circ P_j\}_j$$

$$\alpha_2 = max\{DD \circ P_j\}_j$$

$$\beta = min\{DD^\perp \circ P_j\}_j$$

$$L_1^1 = \alpha_1 * DD + \beta * DD^\perp$$

$$L_2^1 = \alpha_2 * DD + \beta * DD^\perp$$

$$R_1^1 = \alpha_1 * DD + (\beta + W) * DD^\perp$$

$$R_2^1 = \alpha_2 * DD + (\beta + W) * DD^\perp$$

$$L_1^i = \alpha_1 * DD + ((i - 1) * W + \beta) * DD^\perp$$

$$L_2^i = \alpha_2 * DD + ((i-1)*W + \beta) * DD^\perp$$

$$R_1^i = \alpha_1 * DD + (\beta + i*W) * DD^\perp$$

$$R_2^i = \alpha_2 * DD + (\beta + i*W) * DD^\perp, \quad 1 \le i \le \left\lceil \frac{max\{DD^\perp \circ P_j\}_j}{W} \right\rceil$$

The maximum area of the each working row, MWR, is then defined as a polygon such that $MWR^i = [L_1^i, L_2^i, R_2^i, R_1^i]$. The area covered by each row, RCA, is then intersection between the maximum area of each working row, MWR, and the complement of any holes in the work area, H, and the outer boundary of the work area, P. If P is not convex and there are no holes in the work area then the intersection will result in only one polygon. However if these conditions are not met then it may be the case that the intersection produces more than more polygon.

$$(P/H) \cap MWR = RCA$$

For each resultant intersection the working row, WR, is then plotted as such;

$$\gamma_1 = min\{DD \circ ({}^i RCA_j^k - L_1^i)\}_j$$

$$\gamma_2 = max\{DD \circ ({}^i RCA_j^k - L_1^i)\}_j$$

$${}^i WR_1^k = L_1^i + \gamma_1 * DD$$

$${}^i WR_2^k = L_1^i + \gamma_2 * DD$$

$${}^i WR_3^k = L_1^i + \gamma_2 * DD + W * DD^\perp$$

$${}^i WR_4^k = L_1^i + \gamma_1 * DD + W * DD^\perp$$

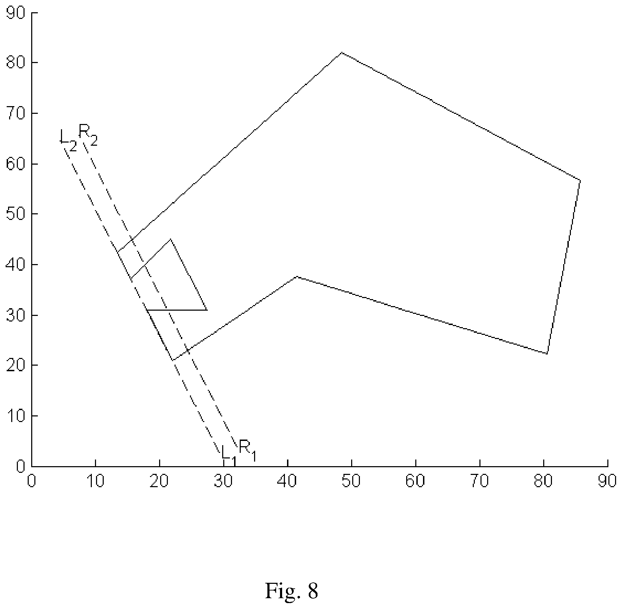

In the example, for the first driving direction, DD = $D_1$ = [-0.38, 0.93], therefore $\alpha_1$ = -9.35, $\alpha_2$ = 58.15, and $\beta$ = 28.26. The four points of MWR[1] as follows, and shown in Fig. 8.

$$L_1^1 = -9.35 * [-0.38, 0.93] + 28.26 * [0.93, 0.38] = [29.72, 1.81]$$

$$L_2^1 = 58.15 * [-0.38, 0.93] + 28.26 * [0.93, 0.38] = [4.65, 64.49]$$

$$R_1^1 = -9.35 * [-0.38, 0.93] + (28.26 + 3) * [0.93, 0.38] = [32.5, 2.93]$$

$$R_2^1 = 58.15 * [-0.38, 0.93] + (28.26 + 3) * [0.93, 0.38] = [7.43, 65.5]$$

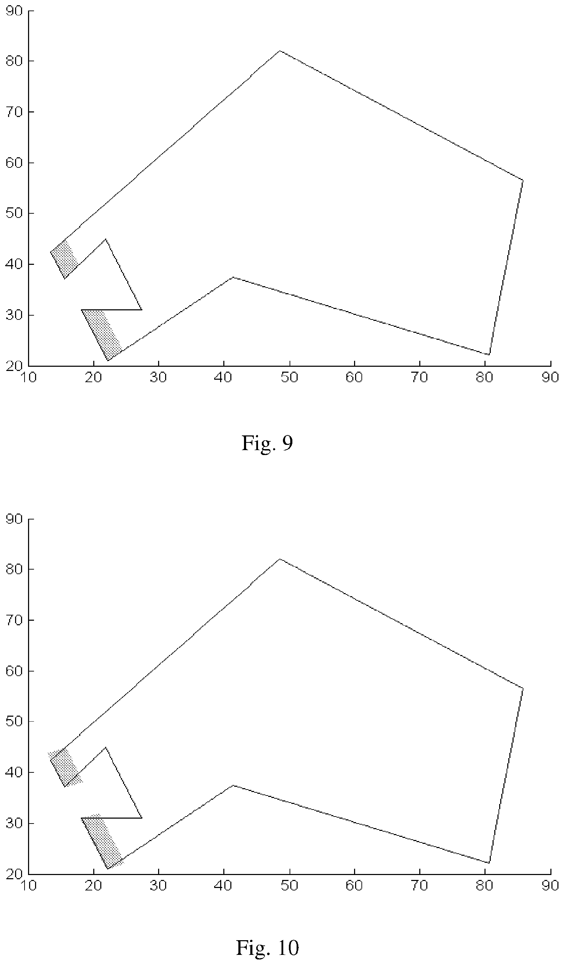

Therefore $MWR^1$ = {[29.72, 1.81], [4.65,64.49], [7.43,65.5], [32.5,2.93]}. The intersection results in two polygons, see Fig. 9, $^1RCA^1$ = {[17.77, 39.76], [15.64, 37.1], [13.48, 42.41], [15.71, 44.93]}, $^1RCA^2$ = {[24.49, 22.95], [22.21, 20.98], [18.13, 31], [21.27, 31]}.

Finally the two working rows are, $^1WR^1$ = {[15.61, 37.09], [12.92, 43.81], [15.7, 44.93], [18.39, 38.2]} and $^1WR^2$ = {[22.07, 20.93], [18.06, 30.97], [20.84, 32.09], [24.86, 22.05]}, see Fig. 10.

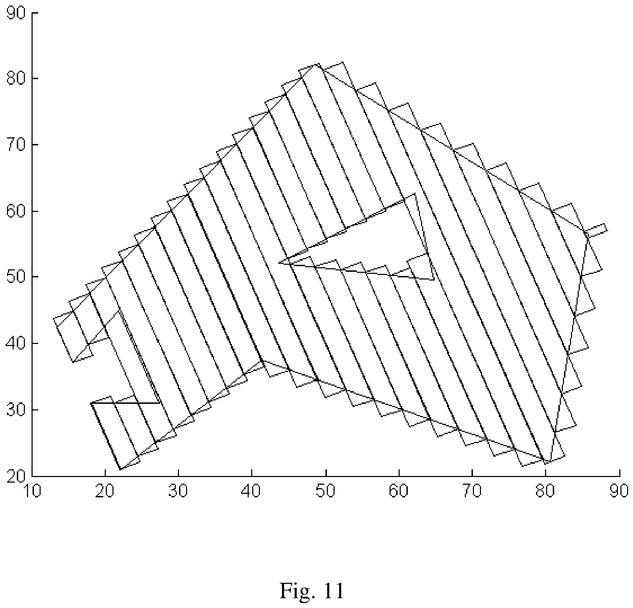

Fig. 11 shows all of the working rows generated across the field in respect of one possible orientation of working rows.

Creation of possible driving paths

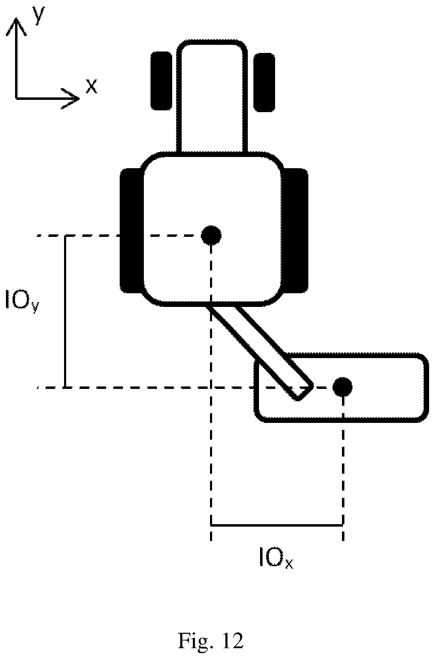

So that a vehicle can navigate the rows and the headlands, driven paths need to be generated for both the headlands and the working rows. The driven paths are plotted down the middle of the defined working rows and headlands. However an offset, $IO = [IO_x, IO_y]$, can also be included between the vehicle centre and the implement centre in order for the implements centre to maintain a central position on the working row, see Fig. 12.

For each working row WR there are two, DR+ and DR-, one in same direction as the driving direction and one in the opposite direction as the driving direction. Each DR starts at SDR and ends at EDR.

$$\theta = \left(\frac{DD_x}{|DD_x|}\right) * \cos^{-1}\left(\frac{DD_y}{\|DD\|}\right)$$

$$^iSDR_+^k = L_1^i + \gamma_1 * DD + 0.5 * W * DD^\perp - IO * \begin{bmatrix} \cos(\theta) & -\sin(\theta) \\ \sin(\theta) & \cos(\theta) \end{bmatrix}$$

$$^iEDR_+^k = L_1^i + \gamma_2 * DD + 0.5 * W * DD^\perp - IO * \begin{bmatrix} \cos(\theta) & -\sin(\theta) \\ \sin(\theta) & \cos(\theta) \end{bmatrix}$$

$$^iDR_+^k = \begin{bmatrix} ^iSDR_+^k, & ^iEDR_+^k \end{bmatrix}$$

$$^iSDR_-^k = L_1^i + \gamma_2 * DD + 0.5 * W * DD^\perp - IO * \begin{bmatrix} \cos(\theta + \pi) & -\sin(\theta + \pi) \\ \sin(\theta + \pi) & \cos(\theta + \pi) \end{bmatrix}$$

$$^iEDR_-^k = L_1^i + \gamma_1 * DD + 0.5 * W * DD^\perp - IO * \begin{bmatrix} \cos(\theta + \pi) & -\sin(\theta + \pi) \\ \sin(\theta + \pi) & \cos(\theta + \pi) \end{bmatrix}$$

$$^iDR_-^k = \begin{bmatrix} ^iSDR_-^k, & ^iEDR_-^k \end{bmatrix}$$

In the example the vehicle has an offset IO = [1, -1], and taking the example of the first WR, $^1WR^1$, the two DR can be found as;

$$\theta = \left(\frac{-0.38}{0.38}\right) * \cos^{-1}\left(\frac{0.93}{1}\right) = -0.376$$

$$^1SDR_+^1 = [29.72 \quad 1.81] + 37.99 * [-0.38 \quad 0.93] + 0.5 * 3 * [0.93 \quad 0.38] + [1 \quad -1]$$
$$* \begin{bmatrix} 0.93 & 0.37 \\ -0.37 & 0.93 \end{bmatrix} = [15.70 \quad 38.21]$$

$$^1EDR^1_+ = [29.72 \quad 1.81] + 45.23 * [-0.38 \quad 0.93] + 0.5 * 3 * [0.93 \quad 0.38] + [1 \quad -1]$$

$$* \begin{bmatrix} 0.93 & 0.37 \\ -0.37 & 0.93 \end{bmatrix} = [13.01 \quad 44.93]$$

$$^1SDR^1_- = [29.72 \quad 1.81] + 45.23 * [-0.38 \quad 0.93] + 0.5 * 3 * [0.93 \quad 0.38] + [1 \quad -1]$$

$$* \begin{bmatrix} -0.93 & -0.37 \\ 0.37 & -0.93 \end{bmatrix} = [15.61 \quad 43.81]$$

$$^1EDR^1_- = [29.72 \quad 1.81] + 37.99 * [-0.38 \quad 0.93] + 0.5 * 3 * [0.93 \quad 0.38] + [1 \quad -1]$$

$$* \begin{bmatrix} -0.93 & -0.37 \\ 0.37 & -0.93 \end{bmatrix} = [18.30 \quad 37.09]$$

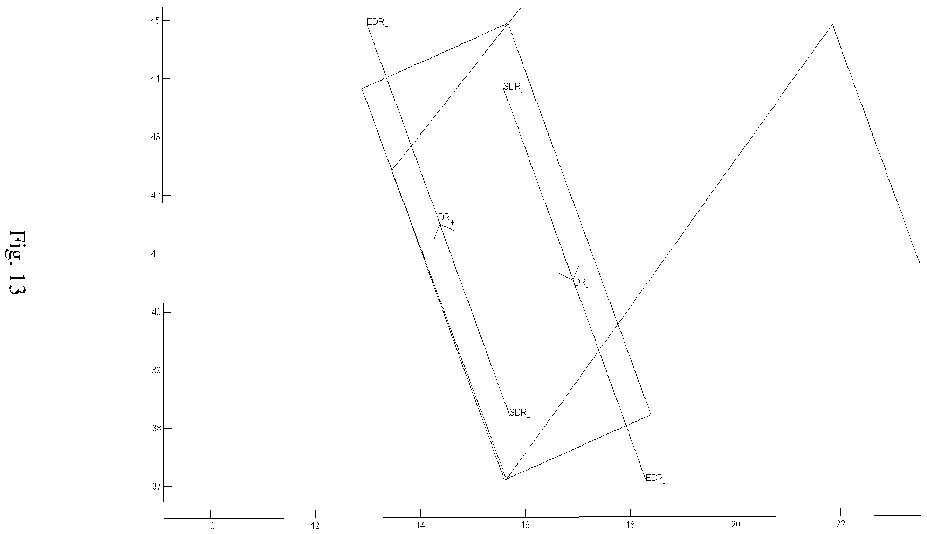

See Fig. 13.

Driven paths are also calculated for the headlands, each headland has two driven paths with one in a clockwise orientation and the other in an anti-clockwise orientation. The headland driven paths must also account for any implement offset are described above. The driven paths of the headlands are calculated using the centre of each headland which is in turn calculated from the inner boundaries. To find the centre of a headland the simplified version of the movePolygonSet method is used. The method if called movePolygonSetBack, the method requires a single polygon and a distance to move. As in the movePolygonSet method the polygon, P, is defined as a number of points and V and A can be derived from P, however the constraint placed on A is different such that Ai is always to the left of Vi.

$$V_i = P_{i+1} - P_i : i = 1 \dots p - 1$$

$$V_p = P_1 - P_p$$

$$\frac{A_i \cdot -V_{i-1}}{|A_i||V_{i-1}|} = \cos\theta = \frac{A_i \cdot V_i}{|A_i||V_i|}, \quad \frac{A_i \cdot [V_{i,y} \quad -V_{i,x}]}{|A_i||V_i|} > \frac{A_i \cdot [-V_{i,y} \quad V_{i,x}]}{|A_i||V_i|}$$

$$|A_i| = \frac{1}{\sin\theta}$$

$$P'_i = P_i + \lambda * A_i : i = 1, \dots, p$$

The iterative process it also simplified as there is only one polygon, such that.
While (W>0)

Calculate $\alpha_n$, where approirate

$$\lambda = min\{\alpha_n, W\}$$

Calculate P',V',A' using $\lambda$

$$W = W - \lambda$$

End while

For the example of the first headland where P = {[27.43,31], [21.87,44.89], [15.64,37.1], [13.48,42.41], [48.49,82.03], [85.75,56.58], [80.59,22.16], [41.41,37.45], [22.21,20.99], [18.13,31]} and W = 1.5. This creates $\alpha$ = [-,-,2.46,35.17,29.88,18.52,64.45,32.12,3.76,913.79], and since $\lambda = min\{\alpha_n,W\}$, therefore $\lambda$ = 1.5 and resultant polygon is P = {[25.22,32.5], [21.44,41.95], [15.22,3417], [11.74,42.70], [48.24,84.01], [87.38,57.29], [81.79,20.08], [41.71,35.72], [21.60,18.49], [15.90,32.50]}.

Since the headlands need two driven paths, one in each direction, these can be derived from P[1], the resultant of the movePolgonSetBack method, and P[2], which is the reversal P[1]. The offset, IO, is again used to create the straight driven path, SD[j], for each direction around the headland. SD[j] has twice as many points as the polygon, P[j], it is derived from such that.

$$P^j = \{P_1^j, \dots, P_p^j\}, \qquad SD^j = \{SD_1^j, \dots, SD_{2*p}^j\}$$

$$V_i = P_{i+1} - P_i : i = 1 \dots p - 1$$

$$V_p = P_1 - P_p$$

$$\theta_i = \left(\frac{V_{i,x}}{|V_{i,x}|}\right) * \cos^{-1}\left(\frac{V_{i,y}}{\|V_i\|}\right)$$

$$SD_{2*i-1}^j = P_i^j - IO * \begin{bmatrix} \cos(\theta_i) & -\sin(\theta_i) \\ \sin(\theta_i) & \cos(\theta_i) \end{bmatrix} : i = 1, \dots, p$$

$$SD_{2*i}^j = P_{i+1}^j - IO * \begin{bmatrix} \cos(\theta_i) & -\sin(\theta_i) \\ \sin(\theta_i) & \cos(\theta_i) \end{bmatrix} : i = 1, \dots, p - 1$$

$$SD_{2*p}^j = P_1^j - IO * \begin{bmatrix} \cos(\theta_p) & -\sin(\theta_p) \\ \sin(\theta_p) & \cos(\theta_p) \end{bmatrix}$$

For the example for P[1], $\theta$ = [-0.38,-2.47,-0.39,0.72,2.17,-2.99,-1.2,-2.28,-0.39,1.57] and SD[1] = {[23.92,33.06],[20.14,42.5],[21.59,40.54],[15.37,32.77],[13.91,34.72],[10.44,43.25],[11.65,44.1 2],[48.16,85.43],[49.64,84.28],[88.77,57.55],[88.22,56.15],[82.64,18.94],[80.5,19.51],[40.41,35. 16],[41.6,34.31],[21.5,17.08],[20.3,19.04],[14.59,33.05],[16.9,33.5],[26.22,33.5]}.

A third method is now introduced called the movePolygonSetForward method. This is exactly the same as the movePolygonSetBack method taking in a polygon and a distance and returning another polygon, however the constraint on A is such that Ai is always to the right of Vi.

$$\frac{A_i \cdot -V_{i-1}}{|A_i||V_{i-1}|} = \cos\theta = \frac{A_i \cdot V_i}{|A_i||V_i|}, \qquad \frac{A_i \cdot [V_{i,y} \quad -V_{i,x}]}{|A_i||V_i|} < \frac{A_i \cdot [-V_{i,y} \quad V_{i,x}]}{|A_i||V_i|}$$

In order to make the straight driven line drivable by the vehicle, the vehicles minimum turning radius must be taken into account. Firstly the SD must be simplified to remove any corners too sharp for the vehicle. This is done by applying the movePolygonSetBack method and then the movePolygonSetForward method using the minimum turning radius (mtr) in succession until the methods create changes.

$$P = movePolygonSetBack(SD,mtr)$$

$$While\ (true)$$

$$P' = movePolygonSetForward(P,2*mtr)$$

$$P'' = movePolygonSetBack(P',2*mtr)$$

$$if\ (P==P'')$$

$$then\ Break\ while$$

$$else\ P=P''$$

$$End\ while$$

```
CS1 = P
CS2 = movePolygonSetForward(P,2*mtr)
CS3 = P'
```

For the example the vehicles minimum turning radius (mtr) is 2 and as previously stated $SD^1$ = {[23.92,33.06], [20.14,42.5], [21.59,40.54], [15.37,32.77], [13.91,34.72], [10.44,43.25], [11.65,44.12], [48.16,85.43], [49.64,84.28], [88.77,57.55], [88.22,56.15], [82.64,18.94], [80.5,19.51], [40.41,35.16], [41.6,34.31], [21.5,17.08], [20.3,19.04], [14.59,33.05], [16.9,33.5], [26.22,33.5]}. Using the movePolygonSetBack($SD^1$,2) generates P = {[26.69,31.50], [21.72,43.91], [15.49,36.12], [12.88,42.53], [12.99,42.61], [48.41,82.69], [48.45,82.66], [86.32,56.80], [86.27,56.67], [80.99,21.46], [26.00,42.92], [38.35,34.16], [22.00,20.15], [17.38,31.50]} and then using movePolygonSetForward(P,4), P' = {[20.78,35.5], [20.56,36.05], [14.37,28.31], [7.99,43.97], [10.31,45.61], [47.91,88.16], [50.82,85.89], [91.21,58.31], [90.16,55.63], [84.2,15.92], [42.29,32.28], [20.4,13.51], [11.44,35.5]}. Finally using *movePolygonSetBack(P',4)* generates P" = {[26.69,31.5], [21.73,43.91], [15.5,36.13], [12.89,42.54], [13,42.62], [48.41,82.69], [48.46,82.66], [86.32,56.8], [86.27,56.67], [80.99,21.47], [41.51,36.87], [22.01,20.16], [17.38,31.5]}.

As can be seen P" is not the same as P so the loop must be restated with P=P", d *movePolygonSetForward(P",4)* generates P' = {[20.78,35.5], [20.56,36.05], [14.37,28.31], [7.99,43.97], [10.31,45.61], [47.91,88.16], [50.82,85.89], [91.21,58.31], [90.16,55.63], [84.2,15.92], [42.29,32.28], [20.4,13.51], [11.44,35.5]} and *movePolygonSetBack(P',4)* generates P" = {[26.69,31.5], [21.73,43.91], [15.5,36.13], [12.89,42.54], [13,42.62], [48.41,82.69], [48.46,82.66], [86.32,56.8], [86.27,56.67], [80.99,21.47], [41.51,36.87], [22.01,20.16], [17.38,31.5]}.

Now it can be seen that P" = P so the loop can be broken and $CS^1$ = {[26.69,31.5], [21.73,43.91], [15.5,36.13], [12.89,42.54], [13,42.62], [48.41,82.69], [48.46,82.66], [86.32,56.8], [86.27,56.67], [80.99,21.47], [41.51,36.87], [22.01,20.16], [17.38,31.5]}, $CS^2$ = {[23.74,33.5], [21.15,39.98], [14.93,32.22], [10.44,43.25], [11.65,44.12], [48.16,85.43], [49.64,84.28], [88.77,57.55], [88.22,56.15], [82.6,18.69], [41.9,34.57], [21.2,16.83], [14.41,33.5]} and $CS^3$ = {[20.78,35.5], [20.56,36.05], [14.37,28.31], [7.99,43.97], [10.31,45.61], [47.91,88.16], [50.82,85.89], [91.21,58.31], [90.16,55.63], [84.2,15.92], [42.29,32.28], [20.4,13.51], [11.44,35.5]}.

The driven path of the headland is built as a sequence of straight lines and of arced lines. The straight lines are defined by a start point, spi, a start direction, sdi, a and length, li, whereas the arced lines have a define centre of rotation, $cr_i$. The centre of rotation of the straight line can also be considered as infinitely far away from the start point in a direction perpendicular to the start direction.

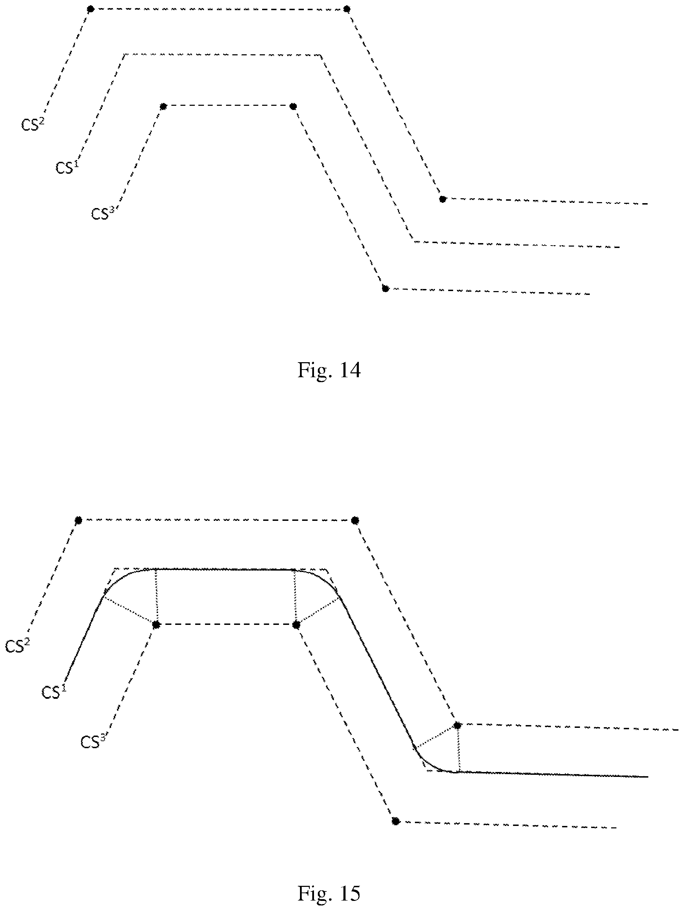

Fig. 14 shows an example of $CS^1$, $CS^2$, and $CS^3$ to define their relationship. The straight lines of the driven path are defined as parallel to the lines in $CS^1$. The corners of $CS^2$ and $CS^3$ are then used as the centres of the arced lines to link together the straight lines.

Fig. 15 shows an example of how the driven path is constructed.

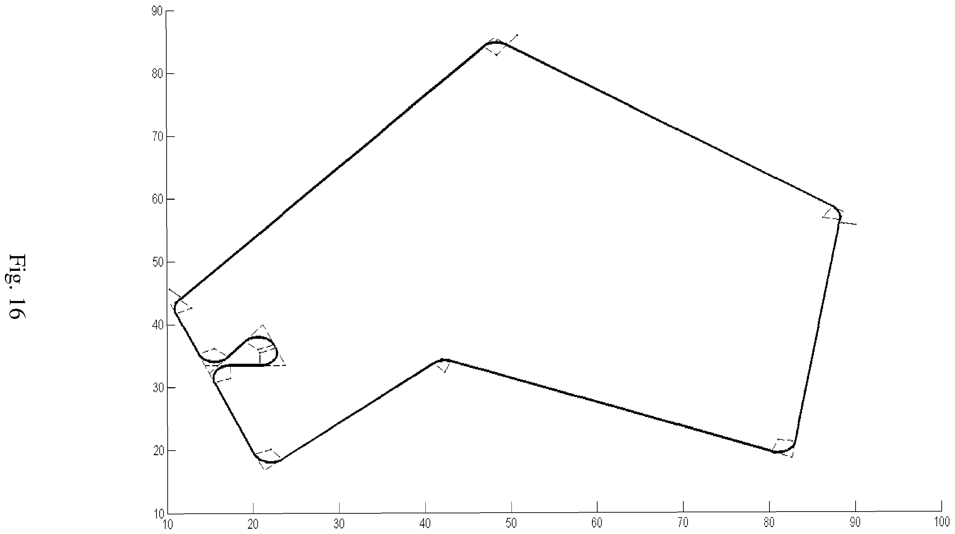

For the example field $CS^1$, $CS^2$, and $CS^3$ have already been calculated, therefore Table 3 below describes the sequence of straight lines and arced lines, the example of the driven path is shown in Fig. 16.

**Table 3**

| i | Start point (sp$_i$) | Start direction (sd$_i$) | Length (l$_i$) | Centre of Rotation (cr$_i$) |
|---|---|---|---|---|
| 1 | [22.64,36.24] | [-0.37,0.93] | 0.60 | ~ |
| 2 | [22.42,36.80] | [-0.37,0.93] | 4.17 | [20.56,36.05] |
| 3 | [19.00,37.30] | [-0.62,-0.78] | 3.11 | ~ |

(continued)

| i | Start point (sp$_i$) | Start direction (sd$_i$) | Length (l$_i$) | Centre of Rotation (cr$_i$) |
|---|---|---|---|---|
| 4 | [17.06,34.88] | [-0.62,-0.78] | 4.16 | [15.50,36.13] |
| 5 | [13.65,35.37] | [-0.38,0.93] | 6.92 | ~ |
| 6 | [11.04,41.78] | [-0.38,0.93] | 2.36 | [12.89,42.54] |
| 7 | [11.48,43.96] | [0.71,0.70] | 0.33 | ~ |
| 8 | [11.71,44.19] | [0.71,0.70] | 0.14 | [10.31,45.61] |
| 9 | [11.81,44.29] | [0.66,0.75] | 53.02 | ~ |
| 10 | [46.92,84.02] | [0.66,0.75] | 2.95 | [48.41,82.69] |
| 11 | [49.59,84.31] | [0.81,-0.59] | 0.07 | ~ |
| 12 | [49.64,84.27] | [0.81,-0.59] | 0.05 | [50.82,85.89] |
| 13 | [49.69,84.24] | [0.83,-0.56] | 45.73 | ~ |
| 14 | [87.45,58.45] | [0.83,-0.56] | 2.38 | [86.32,56.80] |
| 15 | [88.28,56.37] | [-0.21,-0.98] | 0.32 | ~ |
| 16 | [88.21,56.06] | [-0.21,-0.98] | 0.13 | [90.16,55.63] |
| 17 | [88.18,55.93] | [-0.15,-0.99] | 35.15 | ~ |
| 18 | [82.97,21.17] | [-0.15,-0.99] | 3.59 | [80.99,21.47] |
| 19 | [80.27,19.60] | [-0.93,0.36] | 39.98 | ~ |
| 20 | [43.02,34.14] | [-0.93,0.36] | 2.16 | [42.29,32.28] |
| 21 | [40.99,33.79] | [-0.76,-0.65] | 23.29 | ~ |
| 22 | [23.31,18.64] | [-0.76,-0.65] | 3.79 | [22.01,20.16] |
| 23 | [20.15,19.40] | [-0.38,0.93] | 12.25 | ~ |
| 24 | [15.53,30.75] | [-0.38,0.93] | 3.92 | [17.38,31.50] |
| 25 | [17.38,33.50] | [1.00,0.00] | 3.40 | ~ |
| 26 | [20.78,33.50] | [1.00,0.00] | 3.90 | [20.78,35.50] |

Joining Driving Paths

To be able to plot a continual path for a vehicle to negotiate all of the headlands and working rows, connections are needed between the separate entities. Connections are created from working row driven path ends (EDR) to the driven paths of the headlands, and from the driven paths to the headland to working row driven path starts (SDR).

There are three types of connections which are used to connect a point to a path, and each connection type depends on whether it is connecting to a part of the driven path that is either: a straight line, an arced line in the same direction as the turn from the point, or an arced line in the opposite direction to the turn from the point.

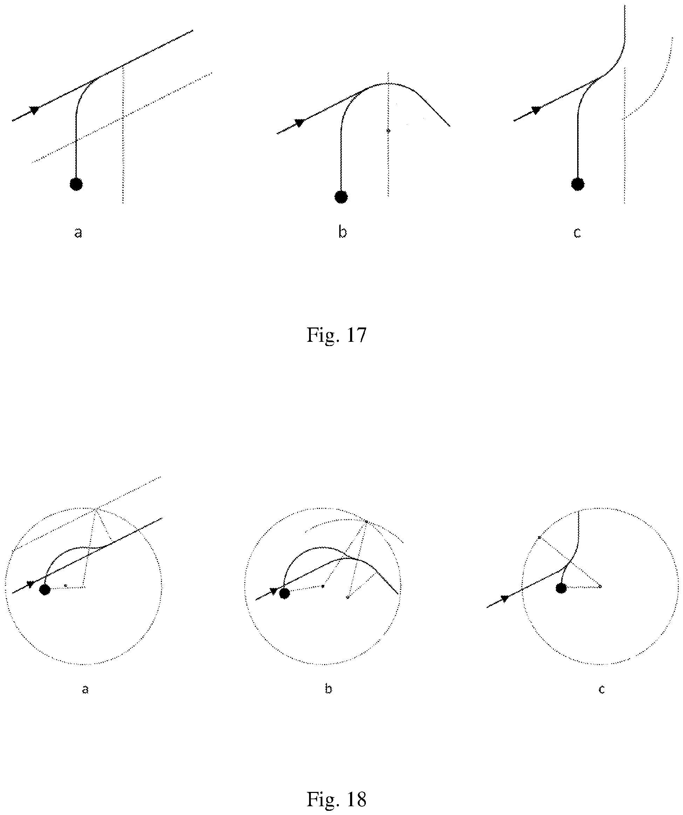

The first type of connection involves moving forward from the point in the specified direction and then making a single turn to join the other driven path, see Fig. 17.

To calculate the centre of the single turn a line is plotted parallel to the specified direction at an offset of the turning radius perpendicular to the specified direction in the direction of the turn. The centre of the single turn is defined as the intercept between this and a second line relating to the driven path. When joining the part of the path that is straight, see Fig. 17(a)) second line is plotted parallel to the driven path at an offset of the turning radius perpendicular to the driven path in the direction of the turn. When joining the part of the path that is an arced line in the same direction (Fig. 17(b)) the second line is in fact a point corresponding to the centre of rotation of the arced line. When joining the part of the path that is an arced line in the opposite direction (Fig. 17(c)) the second line is an arced line with the same centre as the driven path arced line, but with a radius which is twice as large.

The second type of connection involves calculating two turns, in opposite directions, to join a point to the other driven path, see Fig. 18.

The centre of the first is set at a distance of equal to the turning radius away from the point perpendicular to the specified direction in the direction of the first turn. The second turn is then in the opposite direction as the direction of the first turn and it's centre is calculated as the intercept of a circle with the same centre as the first turn but twice the radius and a second line.

When joining the part of the path that is straight (see Fig. 18(a)) the second line is a line plotted parallel to the driven path at an offset of the turning radius perpendicular to the driven path in the direction of the second turn. When joining the part of the path that is an arced line in the same direction as the first turn (Fig. 18(b)) the second line is an arced line with the same centre as the driven path arced line, but with a radius which is twice as large. When joining the part of the path that is an arced line in the opposite direction as the first turn (Fig. 18(c)) the second line is in fact a point corresponding to the centre of rotation of the arced line.

The third type of connection is very similar to the first type of connection however the first straight line is allow to go in the opposite direction of the specified direction, i.e. the vehicle reverses.

The third type of connection is deprioritised, as reversing in the field can cause additional problems, such as taking more time or causing damage, therefore if a type 1 connection or type 2 connection can be made between a working row driven path and a headland then a type 3 connection is not attempted.

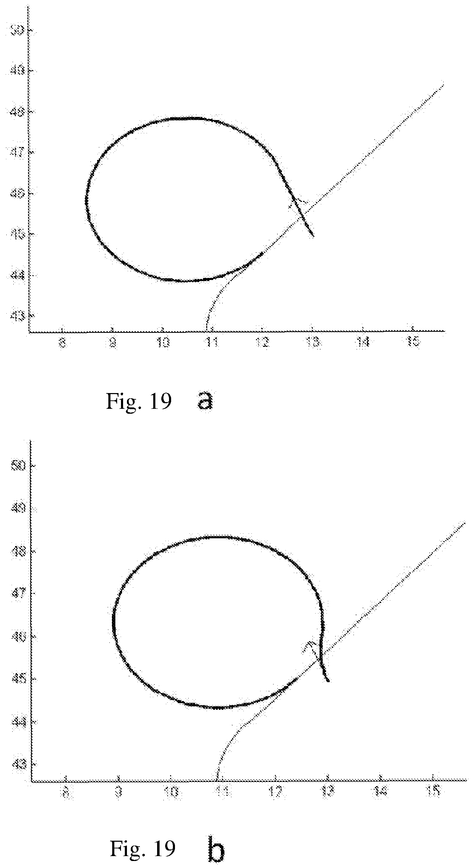

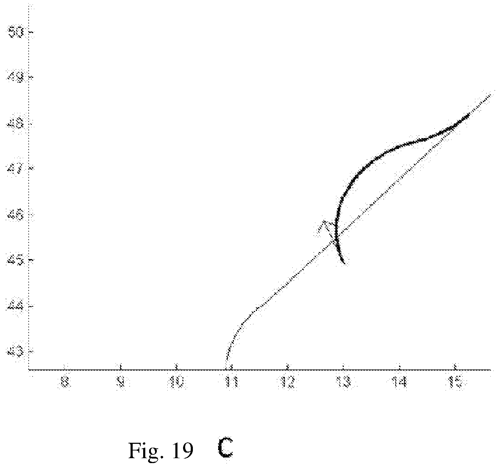

Described earlier, $^1EDR_+^1 = [13.01 \quad 44.93]$, is an exit from a working row driven path which needs to join a headland driven path. Using the headland driven path also described earlier it is possible to make three connections between the working row driven path and the headland driven path, see Fig. 19(a)-(c). Fig. 19(a) is a type 1 connection, while Fig. 19(b) and Fig. 19(c) are type 2 connections.

The three paths are full described in the Table 4 below.

**Table 4**

| i | Start point (sp$_i$) | Start direction (sd$_i$) | Length (l$_i$) | Centre of Rotation (cr$_i$) |
|---|---|---|---|---|
| a | | | | |
| 1 | [13.01,44.93] | [-0.37,0.93] | 1.77 | ~ |
| 2 | [12.36,46.57] | [-0.37,0.93] | 10.36 | [10.50,45.83] |
| b | | | | |
| 1 | [13.01,44.93] | [-0.37,0.93] | 1.08 | [14.87,45.67] |
| 2 | [12.90,45.99] | [0.16,0.99] | 11.44 | [10.92,46.31] |
| c | | | | |
| 1 | [13.01,44.93] | [-0.37,0.93] | 3.34 | [14.87,45.67] |
| 2 | [14.31,47.59] | [0.96,0.28] | 1.02 | [13.76,49.51] |

The connections from the headland driven paths to the working row driven paths starts are calculated in exactly the same way however the specified direction and the headland driven paths are first reversed, the connections are then calculated and finally the connections are reversed.

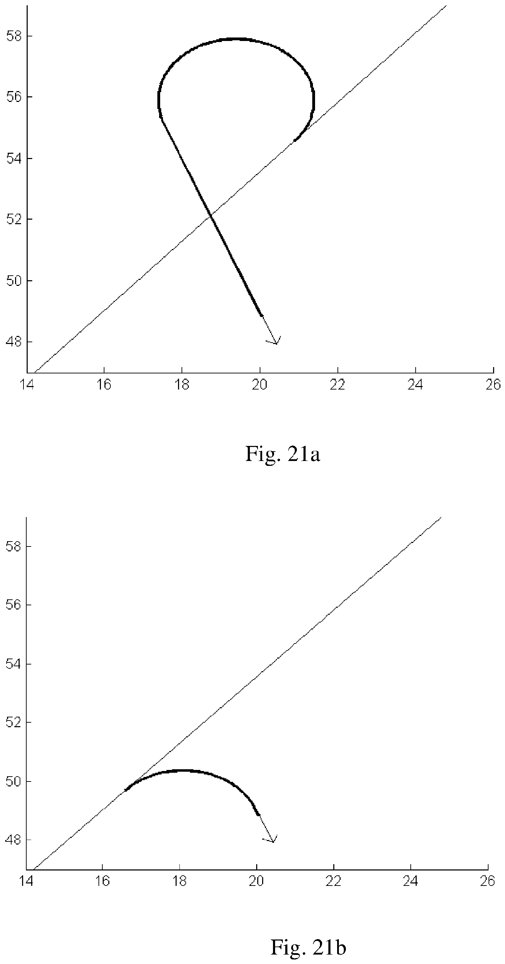

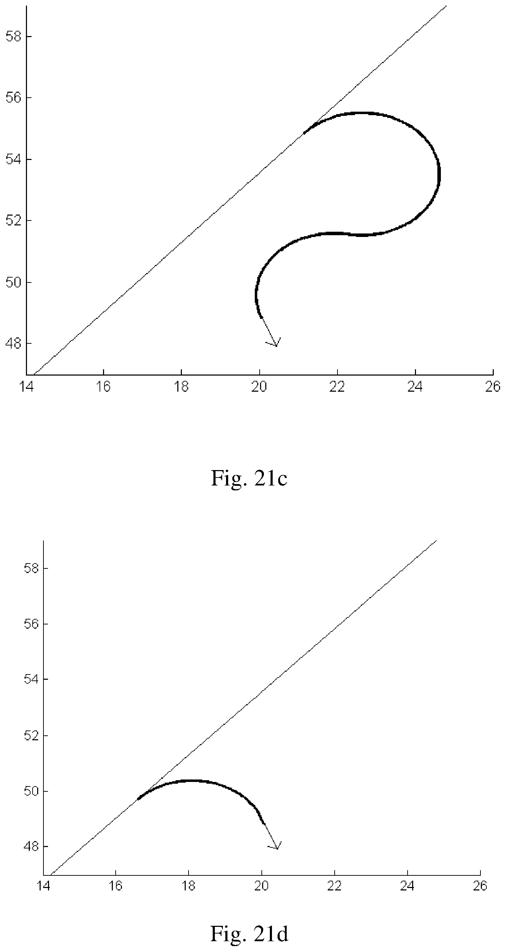

Another working row is defined at a distance of two times the working width, in the direction perpendicular the driving direction, from the originally defined working row. It has two driven paths, as explained earlier, with one of its driven paths beginning at $^3SDR_-^1 = [20.06 \quad 48.84]$. There are 4 possible connections between the headland driven path and the working row driven path, see Fig. 21a-d. In Fig. 21 a and b are type 1 connections while c and d are type 2 connections.

The paths are also described in the Table 5 below.

**Table 5**

| i | Start point (sp$_i$) | Start direction (sd$_i$) | Length (l$_i$) | Centre of Rotation (cr$_i$) |
|---|---|---|---|---|
| a | | | | |
| 1 | [20.89,54.57] | [0.66,0.75] | 8.5 | [19.39,55.89] |
| 2 | [17.53,55.15] | [0.37,-0.93] | 6.8 | ~ |

(continued)

| b | | | | |
|---|---|---|---|---|
| 1 | [16.59,49.70] | [0.66,0.75] | 4.08 | [18.09,48.38] |
| 2 | [19.95,49.12] | [0.37,-0.93] | 0.6 | ~ |
| c | | | | |
| 1 | [21.13,54.84] | [0.66,0.75] | 8.34 | [22.63,53.52] |
| 2 | [22.27,51.55] | [0.98,-0.18] | 4.26 | [21.92,49.58] |
| d | | | | |
| 1 | [16.60,49.71] | [0.66,0.75] | 4.22 | [18.10,48.39] |
| 2 | [20.01,48.99] | [-0.30,0.95] | 0.16 | [21.92,49.58] |

The field gates are also connected to, and from, the headland driven paths in the same way.

Cost Matrix

The connection from one working row driven path to another can be found if the first working row driven path connects to a specified headland driven path and the specified headland driven path also connects to the second working row driven path. In this way, upon leaving the first working row driven path the vehicle can follow the specified headland driven path until it is able to enter the second working row driven path. Since there are multiple ways for each working row driven path to connect to, and to be connected to from, each headland driven path and since there is the possible of multiple headland driven paths, there are many ways in which two working row driven paths can be connected.
A cost matrix is built up of the minimal distance to connect two working row driven path, the field gates are also included in this cost matrix. The ends of the working row driven paths are not able to connect to themselves therefore the minimal distance between them is set to infinity, also two working row driven paths that cover the same working row are not able to be connected (this would not make sense are it would mean the working row was worked twice), therefore their connection in the cost matrix is also set to infinity

The two working row driven path ends, who's connections were described earlier, are $^1EDR^1_+$ and $^3SDR^1_-$. Both of these ends connect to and from, resp., the same headland driven path therefore they can be connected. Fitting the turns together, going from one working row driven path end along the headland driven path and the into another working row driven path can be done a number of ways. Since there are 3 connections from $^1EDR^1_+$ to the headland driven path and there are 4 connection from the headland driven path to $^3SDR^1_-$, then in are 12 possible connection between the two working row driven paths. The table 6 below describes the lengths of all of the possible connections.

**Table 6**

| | | $^1EDR^1_+$ | | |
|---|---|---|---|---|
| | | a | b | c |
| $^3SDR^1_-$ | a | 40.84 | 40.60 | 28.26 |
| | b | 23.44 | 23.19 | 10.86 |
| | c | 38.52 | 38.27 | 25.94 |
| | d | 23.46 | 23.21 | 10.88 |

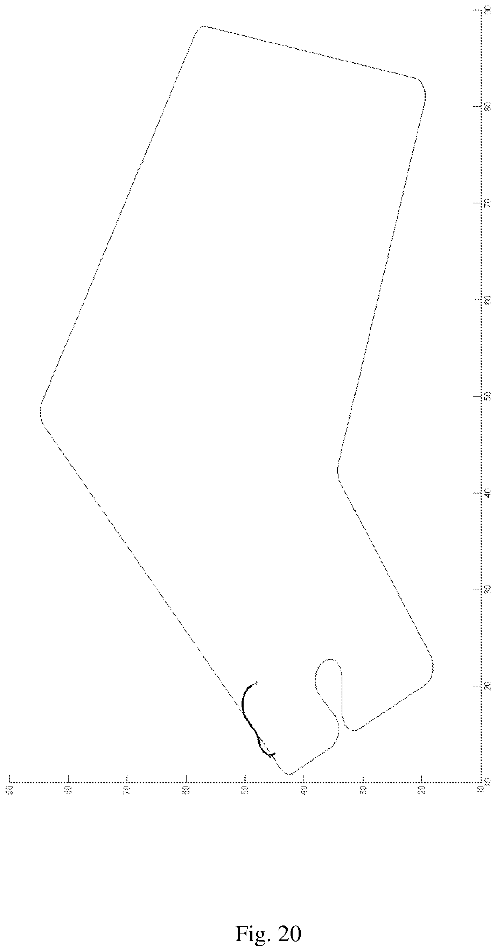

As can be seen from the Table 6 the shortest connection from $^1EDR^1_+$ to $^3SDR^1_-$ is by using connection c and then connection b. The path of the connection is shown in Fig. 20 and described in the Table 7 below.

**Table 7**

| i | Start point ($sp_i$) | Start direction ($sd_i$) | Length ($l_i$) | Centre of Rotation ($cr_i$) |
|---|---|---|---|---|
| 1 | [13.01,44.93] | [-0.37,0.93] | 1.08 | [14.87,45.67] |
| 2 | [12.90,45.99] | [0.16,0.99] | 11.44 | [10.92,46.31] |
| 3 | [15.25,48.19] | [0.66,0.75] | 2.02 | ~ |
| 4 | [16.59,49.70] | [0.66,0.75] | 4.08 | [18.09,48.38] |
| 5 | [19.95,49.12] | [0.37,-0.93] | 0.6 | ~ |

The cost matrix for a portion of the field is chosen below.

| | $^1DR^1_+$ | $^1DR^1_-$ | $^3DR^1_+$ | $^3DR^1_-$ | $^5DR^1_+$ | $^5DR^1_-$ | $G^1$ |
|---|---|---|---|---|---|---|---|
| $^1DR^1_+$ | ~ | ~ | 50.59 | 10.86 | 43.62 | 17.59 | 18.98 |
| $^1DR^1_-$ | ~ | ~ | 28.57 | 27.12 | 25.94 | 33.84 | 19.54 |
| $^3DR^1_+$ | 26.08 | 18.43 | ~ | ~ | 36.90 | 10.87 | 32.05 |
| $^3DR^1_-$ | 45.72 | 45.41 | ~ | ~ | 17.98 | 44.95 | 199.93 |
| $^5DR^1_+$ | 32.79 | 18.02 | 46.91 | 18.43 | ~ | ~ | 54.24 |
| $^5DR^1_-$ | 52.06 | 51.75 | 11.09 | 46.09 | ~ | ~ | 75.76 |
| $G^1$ | 18.72 | 18.41 | 235.60 | 28.25 | 76.01 | 49.97 | ~ |

The cost matrix can be used to determine a feasible route to navigate the field. Since the problem to find the optimal route to navigate the field can be consider an NP-hard problem (i.e. it may not be possible to find a solution in a nominal time frame) the heuristic solvers can be used to find a near optimal route. The solver must also account for the fact working row driven paths are associated to one another by the working row they cover.

In this example a greedy heuristic method is used to find a route to navigate the field. This method provides a simple estimate of what the optimal solution might be. However different solvers could be used, such as a tabu search solver, ant colony solver, genetic algorithms, etc., to give similar results.

Firstly a starting gate is chosen. The gate is chosen by considering all the connections from gates to the working row driven paths. The connections to the working row driven paths are in the rows labelled for each gate. The gate which has the shortest connection to any working row driven path is chosen as the starting gate and the working row driven path is chosen as the first working row driven path in the route. Since this working row driven path has been chosen as a "destination" it cannot be chosen as a destination from another working row driven path again, therefore all the values in the column associated with it are set to infinity. Also the other working row driven path associated with the same working row cannot be chosen as either as destination or a start so all of the values in both the column and the row associated with the other working row driven path are also set to infinity.

The first working row driven path is now considered the start point and shortest connection from it to another working row driven path is now sought after. The shortest connection is that in the row associated with the first working row driven path with the lowest value. The working row driven path with the lowest value is considered the second working row driven path in the route. Again all of the values in the column associated with the second working row driven path and that of the working row driven path associated with the same working row are set to infinity as is the row of values of the working row driven path associated with the same working row. This method continues until only the gates remain as possible destinations. The sum of all of the chosen connections is the estimation of the non-working distance needed to navigate the field.

Additionally a further heuristic solver could be used to improve upon the solution offered by the greedy solution and to find a solution nearer to the optimal solution. The tabu search method takes and initial solution and manipulates it with the aim to find better global solutions without becoming "locked in" to locally optimal solutions.

The tabu search is setup by setting an initial solution to the current local solution and the global solution. The iterative process then begins and a number of "moves" are used to determine a local neighbourhood of solutions around the local solution. The moves used could be switching the direction of a row, or changing the entrance or exit, or switching the order of two rows adjacent in the solution.

From the generated neighbourhood of solutions the best new, non-tabu, solutions is chosen. This new solution now becomes the local solution for the next iteration. The move used to generate the new solution is set to be tabu for a number of iterations, meaning the same move will not be used again for some time. This stops the local solution from becoming stagnant and increases the diversity of the algorithm while also helping to find a globally optimal solution. If the new solution is better than the current global solution then the new solution is also set as the global solution. If the new solution is not better than the global solution for a number of iterations the moves are intensified to find different solutions. The intensification alter the moves differently such that small groups of rows adjacent in the solution have the move expressed upon rather than one row at a time. Due to this there is a limit to the amount of intensification that can be applied to the moves, i.e. if the small group of rows is over half of the available rows. As such when the limit of the intensification is reached the tabu search is finished and an improved solution is returned.

Objective Function Parameterisation

To relate the estimation of the non-working distance, ENWD, to basic properties of the field a simplified model was developed.

The set of generated working rows are calculated using the previously defined methods. For each possible driving direction of the field, where $DD = D_d$, the produced set of working rows are assessed on the following criteria;

Area of the working area, as shown in Fig. 7 = WA

Number of rows = $NR_d$ = number of WR for $D_d$

$$\text{Total area of rows} = TWRA_d = \sum_{i=0}^{n} \text{area of WR}^i$$

Width of the area if the direction perpendicular to the driving direction = $OWd = max\{DD^{\perp}\circ P_j\}_j - min\{DD^{\perp}\circ P_j\}_j$.

$$\text{Average row length} = AR_d = \frac{1}{NR}\sum_{i=0}^{n} max\{DD \circ (\,^{i}RCA_j^k - L_1^i)\}_j - min\{DD \circ (\,^{i}RCA_j^k - L_1^i)\}_j$$

$$\text{Longest row length} = LR_d = max\left\{max\{DD \circ (\,^{i}RCA_j^k - L_1^i)\}_j - min\{DD \circ (\,^{i}RCA_j^k - L_1^i)\}_j\right\}_i$$

$$\text{Shortest row length} = SR_d = min\left\{max\{DD \circ (\,^{i}RCA_j^k - L_1^i)\}_j - min\{DD \circ (\,^{i}RCA_j^k - L_1^i)\}_j\right\}_i$$

The number of rows produced by each driving direction (NRd) are ranked, $NRR_d$, so that for the set with the least number of rows $NRR_d = 0$, and for the set with the most number of rows $NRR_d$ = number of possible driving directions. NRR is then normalised by dividing each number by the number of possible driving directions so that $0 \leq NRR_d \leq 1$.

Therefore the basic model for predicting ENWD is as follows;

$$ENWD_d = \lambda_1 WA + \lambda_2 NR_d + \lambda_3 TWRA_d + \lambda_4 OW + \lambda_5 AR_d + \lambda_6 LR_d + \lambda_7 SR_d + \lambda_8 NRR_d$$

$$Optimal\ DD = min\{ENWD_d\}_d$$

Parameterisation of the Objective function

The parameters of the objective function are set empirically by testing numerous driving directions on a large set of real fields. The real fields were taken from the set of Danish fields registered with the government. For each field and driving direction an estimation of the optimal non-working distance was made using the described methods, the parameter of the objective function area also calculated. Finally a regression algorithm is used to determine the parameterisation of the objective function.

**Example 2**

This example illustrates one embodiment of the present invention.

This example relates to a process of determining an optimized location of placement of a new obstacle in the form a wind turbine.

In the present example the following inputs are provided:

- Defined Field Boundary
- Defined Field Gates
- Representative Vehicle working width
- Representative Vehicle turning radius
- Shape ground area of the new obstacle
- Map of direct spatially relevant costs/earnings associated with obstacle placement.

The present invention is based on the concept of proposing an array of possible locations of placement of the new obstacle and calculating the resulting cost or efficiency when placing the new obstacles in each of such possible locations and finally to select, as the most optimum location of placement, that placement which exhibits the lowest cost.

The placement of a new obstacle within a field impacts the efficiency of subsequent agricultural operations executed on the field. As such a consideration of this impact must be accounted for when assessing the long and short term costs associated with the obstacles placement.

The calculation of cost of performing subsequent agricultural operations is based on the principle described in Example 1.

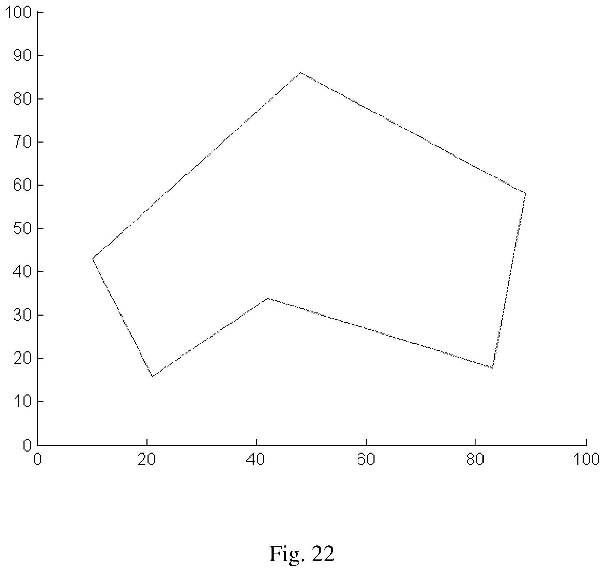

In this example, the field upon which the new obstacle is going to be placed is described by the field boundary which is a polygon consisting of n points. In Fig. 22 the polygon P consists of 6 point ($P_1$,...,$P_6$). The points of P are ordered such that they are in a clockwise orientation. P = ([10,43],[48,86],[89,58],[83,18],[42,34],[21,16]). See Fig. 22.

Creating the initial placement of the obstacles

If the proposed obstacle has an irregular shape, such as a concave polygon, or if the width of the shape is not equal to the height, then the orientation of the obstacle in the field is fixed for this first step. The exact orientation that the obstacle is fixed at needs to be specified as an input along with the shape, and based on practical knowledge of the obstacle and/or the field. The obstacle, O, is defined as a series of points such that O = {$O_1$, $O_2$, ... $O_n$}. The obstacle are bounded by a bounding box with sides parallel to horizontal and vertical axis. The bounding box has a height a, and a width b, which are defined as a = min$|O|_y$ - max $|O|_y$, b = min$|O|_x$ - max $|O|_x$. The centre of the bounding box, c, is

defined as = [$c_x$,$c_y$] = $\left[ \frac{min|O|_x + max|O|_x}{2}, \frac{min|O|_y + max|O|_y}{2} \right]$. In the example the obstacle is the base of a wind turbine that is 5x6 m, therefore O = {[0,0],[0,6],[5,6],[5,0]}, a = 6, b = 5 and C =[3,2.5].

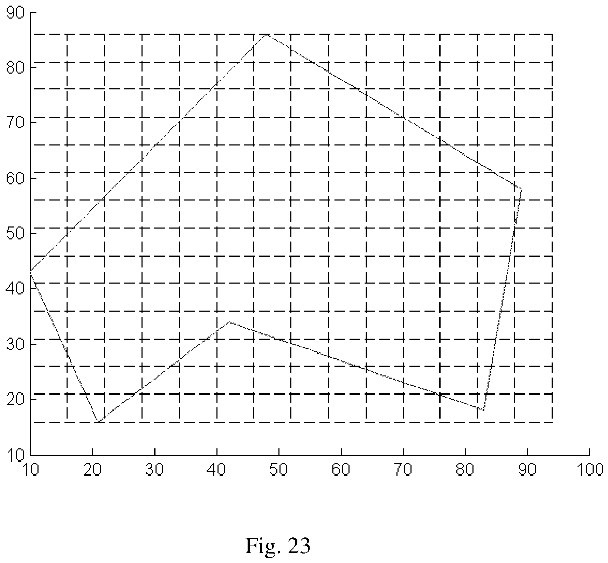

Next, a grid is constructed that covers the complete field with horizontal lines parallel to the longitudinal axis and vertical lines parallel to the latitudinal axis. The distances between the lines are defined as a between the horizontal lines and b between the vertical lines (See Fig. 23).

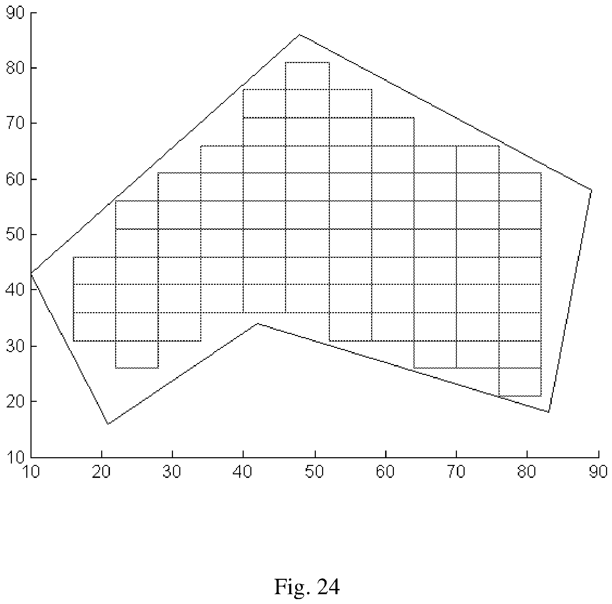

Each cell of the grid is examined, so that if a cell is found to be partly or completely outside of the boundary then that cell is removed. An obstacle is placed in each of the remaining cells so that it touches each edge of the cell (See Fig. 24).

Fig. 24 shows that there are 79 initial possible locations for the placement of the new obstacle.

Calculate the direct obstacle placement cost

The direct obstacle placement cost is calculated from the map of direct spatially relevant costs associated. The placement of an obstacle causes direct costs for a number of reasons; for instance the power generated by a wind turbine may vary due to the proximity to natural or geographical features. Other obstacles such as mini wetlands may need additional drainage pipes to be installed in the field which would incur different costs based on the chosen placement.

A relation of the direct cost associated with the placement of the new obstacle as a function of position of location is provided. In the present example the topology of the field and the surrounding land is completely flat so that there is no impact on power production of the wind turbine, depending on location of placement.

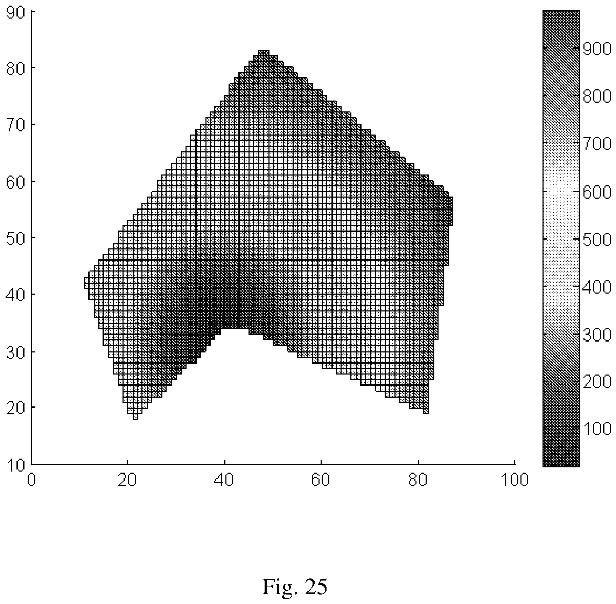

In this example the direct obstacle placement cost is therefore solely based on the cost of connecting the wind turbine to and underground junction box which is located as the coordinate [42,34]. The connection will cost 18 price units per meter to install. This results in map of direct obstacle placement cost as shown in fig. 25. It is seen that the direct obstacle placement cost is proportional to the distance from the point [42,34], where the junction box is located.

In other situations, one may chose not to consider the direct obstacle placement cost, so that the cost of placement of the obstacle is based solely on subsequent operational cost in working the field.

Calculating the operational cost of the placement of the new obstacle

The placement of the obstacle within the field area will require the modification of the operational plan for that field (as illustrated in example 1). The operational costs can be directly related to the estimate minimal non-working distance, which can be estimated using the method/tool described in Example 1. From the initial headland and working rows are plot for some example placements of the obstacle. Other types of operational costs may be selected as the basis for performing the calculations.

In this example, the operational cost of the placement of the new obstacle is based on the principle as explained in example 1, of:

1. Approximating the field boundary to a boundary polygon

2. Approximating the new obstacle boundary to a new obstacle polygon

3. Approximating any existing obstacle boundary to a obstacle polygons

4. Defining headland located immediately within the boundary polygon

5. Defining headlands surrounding each obstacle polygon

6. Defining a work area comprising that area within the field boundary which is not an obstacle and not a headland.

7. Define in respect of each orientation of a side of a headland, an array of parallel working rows, where the working rows are parallel to that specific side of the headland.

8. In respect of each orientation of a side of a headland, create an array of possible continuous driving path by connecting parallel working rows with headland or parts of headland in such a way that each possible continuous path is covering each headland and each working row.

9. In respect of each possible continuous driving path, calculate a cost or efficiency of following that path.

10. Determine, as the most optimum driving path, that driving path exhibiting the lowest cost or the highest efficiency.

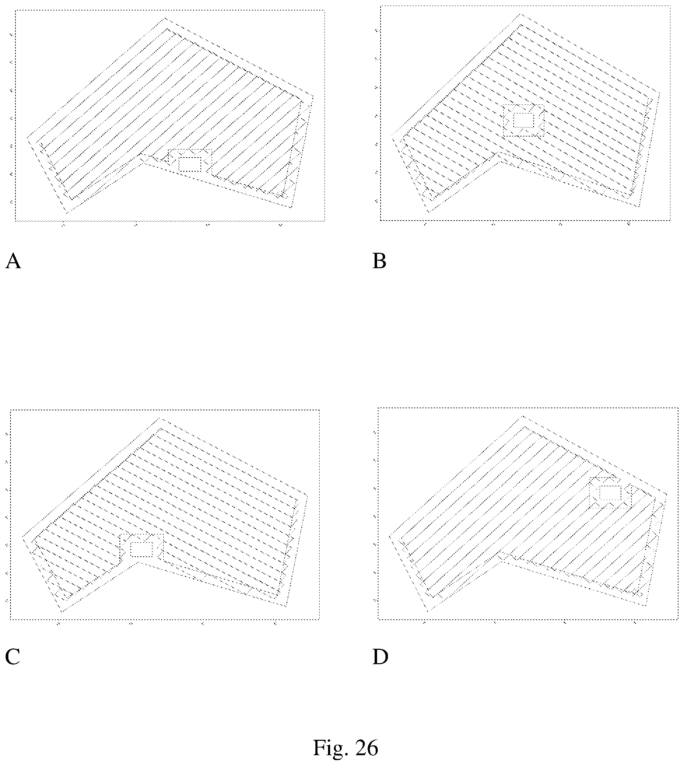

Fig. 26a-d illustrates a few example of possible locations of the new obstacle. The field has been divided into headlands near the field boundary and a headland surrounding the new obstacle. Working rows located within the work area and being parallel to one side of a headland is shown in the figures. Many other similar possibilities for location of the new obstacle and orientations of working rows are in existence. These will be included in the calculations.

Calculate the overall costs

The overall costs of the placement of the can be estimated as follows;

$$OVC = DC_p + OC_p - OC_0$$

Where OVC is the overall costs, $DC_P$ is the direct cost of the obstacles' placement, $OC_P$ is the operational cost of the field with the given obstacle placement and $OC_0$ is the operational cost of the field before the obstacle was added.

For the example the Operational Costs both before and after the placement are defined as proportional to the estimated total driven distance, with a cost of 1 cost unit per meter. The 1 cost unit per meter cost includes all the operational cost include to establish and harvest a crop which can include several operations such as tillage, crop maintenance and harvest.

The costs are summarised in the table below.

| c | | Direct Spatial cost | Operational Costs | Original Operational Cost | Overall cost |
|---|---|---|---|---|---|
| cx | cy | | | | |
| 43 | 38.5 | 82.98 | 1472.46 | 1445.43 | 110.00 |
| 49 | 38.5 | 149.79 | 1423.99 | 1445.43 | 128.35 |
| 37 | 38.5 | 121.08 | 1492.02 | 1445.43 | 167.67 |
| 55 | 33.5 | 234.17 | 1393.27 | 1445.43 | 182.01 |
| 31 | 38.5 | 213.93 | 1476.34 | 1445.43 | 244.84 |
| 31 | 33.5 | 198.20 | 1494.60 | 1445.43 | 247.38 |
| 55 | 38.5 | 247.62 | 1461.54 | 1445.43 | 263.74 |
| 61 | 33.5 | 342.12 | 1402.85 | 1445.43 | 299.54 |
| 67 | 33.5 | 450.09 | 1426.22 | 1445.43 | 430.88 |
| 25 | 28.5 | 321.62 | 1555.74 | 1445.43 | 431.92 |
| 67 | 28.5 | 460.76 | 1429.78 | 1445.43 | 445.11 |
| 19 | 33.5 | 414.10 | 1481.06 | 1445.43 | 449.73 |
| 25 | 33.5 | 306.13 | 1618.81 | 1445.43 | 479.51 |
| 25 | 43.5 | 350.54 | 1574.49 | 1445.43 | 479.60 |
| 19 | 43.5 | 447.93 | 1503.20 | 1445.43 | 505.70 |
| 25 | 48.5 | 402.19 | 1559.66 | 1445.43 | 516.42 |
| 73 | 28.5 | 566.71 | 1442.36 | 1445.43 | 563.64 |
| 31 | 53.5 | 403.00 | 1609.74 | 1445.43 | 567.30 |
| 25 | 53.5 | 465.66 | 1572.55 | 1445.43 | 592.77 |
| 49 | 63.5 | 545.74 | 1498.98 | 1445.43 | 599.29 |
| 43 | 63.5 | 531.30 | 1513.72 | 1445.43 | 599.59 |
| 37 | 58.5 | 450.09 | 1612.38 | 1445.43 | 617.04 |
| 31 | 58.5 | 483.41 | 1604.34 | 1445.43 | 642.32 |
| 79 | 23.5 | 692.30 | 1397.62 | 1445.43 | 644.49 |
| 79 | 28.5 | 673.32 | 1430.37 | 1445.43 | 658.26 |
| 61 | 63.5 | 631.61 | 1488.37 | 1445.43 | 674.55 |
| 37 | 63.5 | 538.57 | 1594.96 | 1445.43 | 688.10 |
| 55 | 63.5 | 580.27 | 1620.49 | 1445.43 | 755.33 |
| 43 | 68.5 | 621.26 | 1580.62 | 1445.43 | 756.45 |
| 79 | 43.5 | 687.60 | 1515.10 | 1445.43 | 757.27 |
| 73 | 63.5 | 770.28 | 1485.67 | 1445.43 | 810.51 |
| 79 | 38.5 | 670.91 | 1586.95 | 1445.43 | 812.43 |
| 67 | 63.5 | 696.03 | 1577.26 | 1445.43 | 827.87 |
| 79 | 33.5 | 666.06 | 1608.78 | 1445.43 | 829.41 |
| 61 | 68.5 | 708.95 | 1568.53 | 1445.43 | 832.04 |

(continued)

| c | | Direct Spatial cost | Operational Costs | Original Operational Cost | Overall cost |
|---|---|---|---|---|---|
| cx | cy | | | | |
| 49 | 78.5 | 810.85 | 1478.30 | 1445.43 | 843.72 |
| 49 | 73.5 | 722.08 | 1589.86 | 1445.43 | 866.50 |
| 79 | 48.5 | 715.32 | 1648.10 | 1445.43 | 917.99 |
| 73 | 58.5 | 711.23 | 1673.41 | 1445.43 | 939.21 |
| 79 | 58.5 | 798.77 | 1590.84 | 1445.43 | 944.18 |
| 79 | 53.5 | 752.83 | 1702.70 | 1445.43 | 1010.10 |
| 49 | 48.5 | 675.84 | 2052.62 | 1445.43 | 1283.03 |
| 67 | 58.5 | 625.46 | 2195.38 | 1445.43 | 1375.40 |
| 61 | 48.5 | 788.88 | 2034.63 | 1445.43 | 1378.08 |
| 31 | 43.5 | 697.72 | 2128.32 | 1445.43 | 1380.60 |
| 49 | 53.5 | 683.72 | 2178.26 | 1445.43 | 1416.54 |
| 73 | 53.5 | 828.85 | 2037.15 | 1445.43 | 1420.57 |
| 55 | 43.5 | 859.02 | 2062.39 | 1445.43 | 1475.98 |
| 55 | 73.5 | 897.81 | 2075.76 | 1445.43 | 1528.14 |
| 73 | 33.5 | 809.49 | 2192.86 | 1445.43 | 1556.92 |
| 49 | 43.5 | 678.61 | 2340.43 | 1445.43 | 1573.61 |
| 37 | 48.5 | 620.91 | 2401.71 | 1445.43 | 1577.19 |
| 43 | 73.5 | 676.31 | 2371.25 | 1445.43 | 1602.13 |
| 61 | 43.5 | 759.63 | 2291.48 | 1445.43 | 1605.68 |
| 55 | 58.5 | 693.96 | 2367.76 | 1445.43 | 1616.29 |
| 67 | 38.5 | 878.75 | 2214.62 | 1445.43 | 1647.94 |
| 55 | 48.5 | 782.75 | 2346.76 | 1445.43 | 1684.08 |
| 43 | 43.5 | 675.95 | 2481.78 | 1445.43 | 1712.30 |
| 31 | 48.5 | 844.78 | 2324.43 | 1445.43 | 1723.77 |
| 67 | 53.5 | 772.97 | 2412.01 | 1445.43 | 1739.55 |
| 37 | 43.5 | 804.63 | 2399.20 | 1445.43 | 1758.40 |
| 61 | 38.5 | 776.41 | 2465.67 | 1445.43 | 1796.64 |
| 55 | 53.5 | 860.82 | 2403.89 | 1445.43 | 1819.28 |
| 43 | 48.5 | 827.54 | 2476.81 | 1445.43 | 1858.92 |
| 43 | 53.5 | 768.59 | 2570.24 | 1445.43 | 1893.40 |
| 49 | 68.5 | 604.39 | 2750.96 | 1445.43 | 1909.92 |
| 73 | 43.5 | 843.34 | 2513.35 | 1445.43 | 1911.25 |
| 25 | 38.5 | 831.57 | 2538.59 | 1445.43 | 1924.73 |
| 37 | 53.5 | 798.21 | 2612.08 | 1445.43 | 1964.86 |
| 55 | 68.5 | 772.30 | 2670.08 | 1445.43 | 1996.94 |
| 73 | 48.5 | 726.16 | 2759.98 | 1445.43 | 2040.71 |
| 61 | 58.5 | 605.80 | 2932.25 | 1445.43 | 2092.62 |

(continued)

| c | | Direct Spatial cost | Operational Costs | Original Operational Cost | Overall cost |
|---|---|---|---|---|---|
| cx | cy | | | | |
| 43 | 58.5 | 787.47 | 2770.03 | 1445.43 | 2112.07 |
| 61 | 53.5 | 808.13 | 2895.09 | 1445.43 | 2257.79 |
| 67 | 48.5 | 842.95 | 2890.14 | 1445.43 | 2287.67 |
| 73 | 38.5 | 829.49 | 2918.04 | 1445.43 | 2302.10 |
| 19 | 38.5 | 855.02 | 2914.63 | 1445.43 | 2324.22 |
| 67 | 43.5 | 819.71 | 2981.84 | 1445.43 | 2356.11 |
| 49 | 58.5 | 888.62 | 2961.72 | 1445.43 | 2404.92 |

Evaluate the cost of obstacle placements

The overall cost of placing an obstacle in a cell of the grid is described above.

The set of placements are in the table above ranked by the costs from minimal to maximal.

A subset of placements is created. The subset has approx. 16% of the placements from the main set. These 16% are those which have the minimal overall costs according to the previous ranking. The best placement (the placement with the minimally ranked overall cost) is compared to the overall cost of the previously stored best placements (which is set to infinity on the first iteration) and if the new best placement has a lower cost, then it is stored.

The overall costs of the subset are also evaluated by taking the average overall cost of each placement in the subset. This average is compared with the stored average costs from previous iterations (which is set to infinity on the first iteration) and if the new average is lower than the stored average, then the new average is stored and the number of iteration is reset to zero, since there is an improvement. If, however, the new average cost is not better than the stored average cost then a counter of iterations is activated. If this counter exceeds a limit, based on 10% of the size of the original set, then the process is deemed as unable to improve anymore, and the best stored placement is returned as the recommended placement.

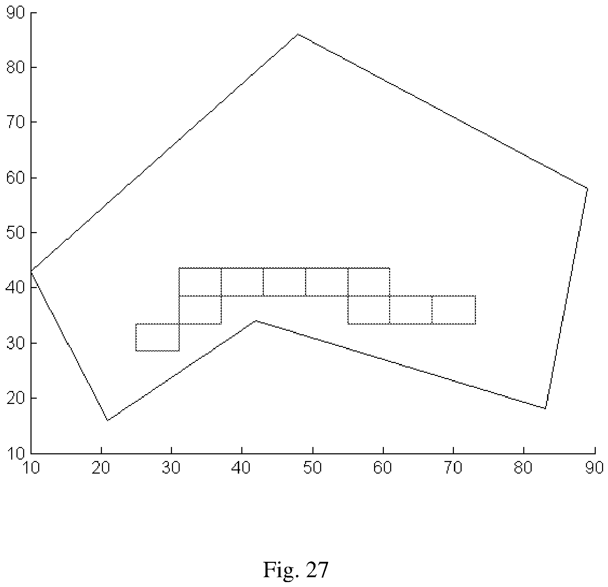

The set of placements has a set size of 79, therefore if the top 16% of placements are chosen. This means the subset will have 13 members. The top 13 placements in the cost table above are highlighted. The sub group of placement is show on the map of Fig. 27. The average cost of the subset members is 250.63 cost units.

Moving Placements

A new set of placements is generated for the chosen sub set by modifying the chosen obstacle placements and orientations. Each placement if modified by 6 movements so that each placement generates 6 new placements. These moves are vertical movement, horizontal movement and rotation movement, each of which can be done in a positive or negative direction.

Vertical movement

The vertical movement, vm, shifts creates new placements, N, with a vertical shift of a specified distance, vd, from the original placement, O, such that,

$$vm^+(O) \to N \qquad N_i = O_i + [0, vd]$$

$$vm^-(O) \to N \qquad N_i = O_i - [0, vd]$$

The vertical shift distance, vd, is specified by the height of the original obstacle a, such that vd=0.1*a.

Horizontal movement

The horizontal movement, hm, shifts creates new placements, N, with a horizontal shift of a specified distance, hd, from the original placement, O, such that,

$$hm^+(O) \to N \qquad N_i = O_i + [hd, 0]$$

$$hm^-(O) \to N \qquad N_i = O_i - [hd, 0]$$

The horizontal shift distance, hd, is specified by the width of the original obstacle b, such that hd=0.1*b.

Rotation movement

The rotation movement, rm, shifts creates new placements, N, with an angular rotation of a specified degree, rd, from the original placement, O, about the centre of the obstacle, c, such that,

$$c = [c_x, c_y] = \left[\frac{\min|O|_x + \max|O|_x}{2}, \frac{\min|O|_y + \max|O|_y}{2}\right]$$

$$rm^+(O) \to N \qquad N_i = ((O_i - C) * \begin{bmatrix} \cos(rd) & \sin(rd) \\ -\sin(rd) & \cos(rd) \end{bmatrix}) + c$$

$$rm^-(O) \to N \qquad N_i = ((O_i - c) * \begin{bmatrix} \cos(rd) & -\sin(rd) \\ \sin(rd) & \cos(rd) \end{bmatrix}) + c$$

The angular rotation, rd, is specified as rd = $\pi$*0.1 (pi x 0.1).
Fig. 27 illustrates the six different ways of movement of a new obstacle.
Once 6 new placements have been generated from each of the placements in the subset, the new placements are checked for interaction with the field boundary. If any of the new placements have an interaction with the boundary they are eliminated for the new set. The new set is then used to begin the next iteration of calculations of the overall costs.
Using the example of the best placement which is centred at [43,38.5], the obstacle O is defined at O = {[40,36],[40,41],[46,41],[46,36]}. The distances each movement displaces the placement are vd = 0.6, hd = 0.5 and rd = 0.3141, Each of the movement produce the follow new placements.

$vm^+(O) \to${[40,36.6],[40,41.6],[46,41.6],[46,36.6]}
$vm^-(O) \to${[40,35.4],[40,40.4],[46,40.4],[46,35.4]}
$hm^+(O) \to${[40.5,36],[40.5,41],[46.5,41],[46.5,36]}
$hm^-(O) \to${[39.5,36],[39.5,41],[45.5,41],[45.5,36]}
$rm^+(O) \to${[39.4,37.0],[40.9,41.8],[46.6,40.0],[45.1,35.2]}
$rm^-(O) \to${[40.9,35.2],[39.4,40.0],[45.1,41.8],[46.6,37.0]}

All of the placements in the subset generate 6 new placements, therefore the process is restarted with 78 new possible obstacle placements.

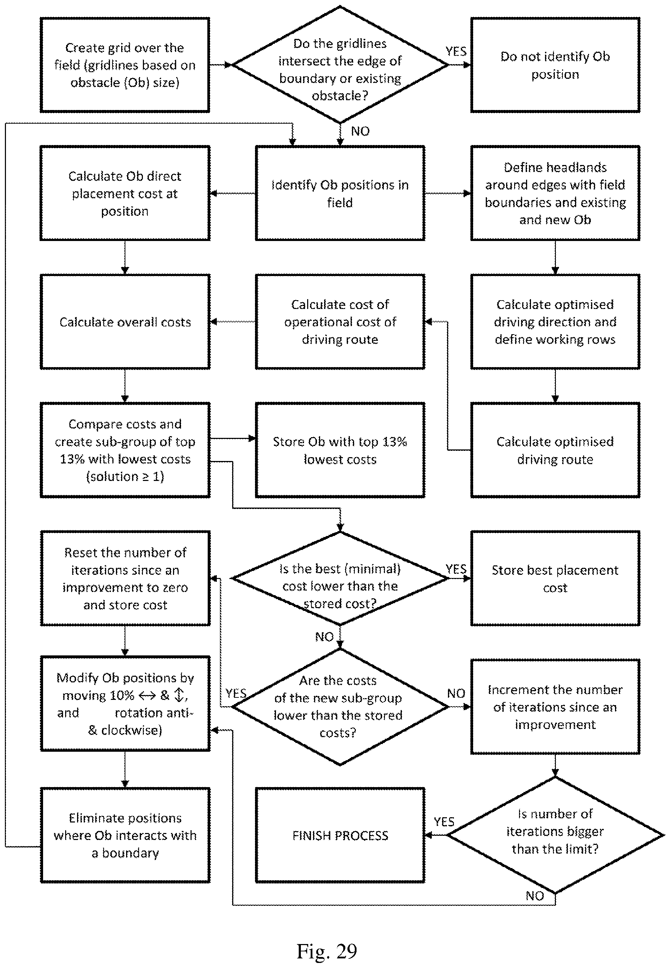

Fig. 29 is a flow diagram illustrating the individual steps to be performed in optimizing the exact location of a new obstacle to be placed in an agricultural field.

## Claims

1.   A computer program product, which when loaded or operating on a computer, being adapted to perform a method for determination of an optimized position and orientation of placement, and optionally also the shape of a new obstacle in an agricultural field; said method comprising the steps:

   a) providing information relating to:

      i) coordinates relating to the boundaries of said agricultural field; and

ii) coordinates relating to the boundaries of the ground shape of said new obstacle to be laid out in said field;

b) providing information relating to one or more capacity parameters relating to a specific working vehicle intended for working said field;

c) optionally providing information relating to the direct cost of the placing said new obstacle, as dependent on the specific position of placement thereof;

d) performing a calculation of an optimized position and orientation of placement of said new obstacle; wherein said optimized position and orientation of placement, and optionally also the shape of said new obstacle, is being calculated on the basis of said information retrieved in step a) and step b) and step c).

2. A computer program product according to claim 1, wherein in said method, step a) furthermore comprises providing information relating to:

iii) coordinates relating to the position of one or more entry/exit gates located at said boundary of said field; and/or

iv) coordinates relating to the boundaries of more or more obstacles already present within said agricultural field.

3. A computer program product according to claim 1 or 2, wherein in said method, the capacity parameters of step b) independently comprising one or more of the following: effective working width of a representative working vehicle or implement, minimum turning radius of a representative working vehicle, fuel consumption of said working vehicle or implement.

4. A computer program product according to any of the preceding claims, wherein said method involves suggestion of an array of possible positions and orientations of placement and optionally also suggestion of an array of possible shapes of said new obstacle, and wherein step d) involves calculating, in respect of each possible position and orientation of placement, and optionally also in respect of each such shape of said new obstacle, an overall cost (OVC) for placement said new obstacle at said specific position and orientation of placement, and having that specific shape, wherein said optimized position and orientation of placement, and optionally also shape of said obstacle is being defined as that specific position and orientation of placement, and optionally also shape of said new obstacle which exhibits the lowest overall cost.

5. A computer program product according to claim 4, wherein in said method, said cost for placement of said new obstacle at said specific position of placement is defined as:

$$OVC = DC_P + OC_P - OC_0; \text{ or as } OVC = OC_P - OC_0$$

-wherein OVC being the overall cost; and
DCp being the direct cost for placement of said new obstacle at said specific position; and
$OC_P$ being the operational cost of working the field with the new obstacle positioned at that specific position of placement; and
$OC_0$ being the operational cost of working the field before or without the new obstacle is being positioned at that specific position of placement.

6. A computer program product according to claim 5, wherein in said method, $OC_P$ and/or $OC_0$ independently being found by defining an array of possible working paths for the vehicle to follow and calculating in respect of each possible working path of said array, an efficiency parameter in respect in respect of each said possible working path, wherein $OC_P$ and/or $OC_0$ independently being defined as that specific working path, of the array of possible working path, exhibiting the highest efficiency.

7. A computer program product according to claim 6, wherein in said method, $OC_P$ and/or $OC_0$ independently being found by the following steps:

i) approximating the boundary of the field to a boundary polygon; and approximating the boundary of the ground shape of the new obstacle to be placed in said field to a new obstacle polygon; and by approximating the boundary of any existing obstacle already located in said field to an existing obstacle polygon;

ii) defining one or more headlands located immediately within said boundary polygon;

iii) defining one or more headlands surrounding any existing obstacle polygon, if present;

iv) defining a headland surrounding said new obstacle polygon, if present;

v) define a work area which comprises any area of the field which does not belong to a headland or an obstacle;

vi) define an array of possible working row orientations, each possible working row orientation being parallel to the orientation of a headland;

vii) within the work area and in respect of each working row orientation within the array of possible working row orientations, define an array of parallel working rows;

viii) in respect of each array of parallel working rows, construct an array of possible continuous working paths by connecting working rows with headlands or part of headland, wherein each said possible continuous working path is covering all working area and all headlands;

ix) in respect of continuous working paths found in step viii) calculate an efficiency parameter, expressing the efficiency in following that specific continuous working path;

x) define as $OC_P$ and/or $OC_0$ that specific continuous working path exhibiting the highest efficiency.

8. A computer program product according to claim 7, wherein in said method, in step iii) the headland includes a safety offset area; and/or independently wherein in step iv) the headland includes a safety offset area.

9. A computer program product according to any of the claims 5 - 8 wherein in said method, the suggestion of an array of possible positions of placement of said new obstacle involves the following steps:

1) defining a rectangular bounding box having a magnitude of width and a height adapted to said new obstacle to be placed on said field in such a way that said obstacle touches all four sides of said bounding box;

2) defining a grid of cells overlaying said agricultural field;

3) discarding from the grid any cell which is partly or completely outside the boundary of said agricultural field, thus leaving behind only those cells located fully within boundary of said agricultural field; and thereby defining an array of possible positions of said new obstacle to be placed in said field; each remaining cell defines such a possible position.

4) in respect of each possible position in the array of possible positions obtained, and optionally in respect of each possible shape of the obstacle in the array of possible shapes, calculate the overall cost (OVC) for placing said new obstacle in that specific possible position, and having that specific shape;

5) in respect of each possible position of the new obstacle in the array of possible positions, modify the position or orientation, and optionally also the shape of said obstacle so as to obtain a new array of possible positions and orientations, and optionally shape of the new obstacle;

6) in respect of each possible position or orientation in the new array of possible positions or orientations, and optionally also in respect of the shape of the new obstacle, as defined in step 5), calculate the overall cost (OVC) for placing said new obstacle in that specific possible position or orientation;

7) iteratively repeat steps 4), 5) and 6);

8) define as the optimized placement and orientation and optionally also shape of the new obstacle as that placement and orientation, and optionally shape exhibiting the lowest overall cost (OVC).

10. A computer program product according to claim 9, wherein in said method, each cell of the grid of cells is having a width and a height corresponding to the width and height, respectively, of said bounding box.

11. A computer program product according to claim 9 or 10 wherein in said method, the modification of the position or orientation as defined in step 5) is selected from the group comprising:

- a translational movement of the new obstacle in a direction parallel to the width of the bounding box in one direction;

- a translational movement of the new obstacle in a direction parallel to the width of the bounding box in the opposite direction;

- a translational movement of the new obstacle in a direction parallel to the height of the bounding box in one direction;

- a translational movement of the new obstacle in a direction parallel to the height of the bounding box in the opposite direction;

- a rotation of the new obstacle in one direction;

- a rotation of the new obstacle in the opposite direction.

12. A computer program product according to any of the claims 9 - 11, wherein in said method, step 5) of said method is followed by step 5a):

in case the bounding box corresponding to a modified possible position or orientation of said new obstacle is arranged partly or completely outside the boundary of said agricultural field, said modified possible position or orientation of said new obstacle is discarded; and/or
wherein in said method, step 4) of said method is followed by step 4a):

rank the possible positions of the new obstacle in relation to overall cost and discard a part of the possible positions within the array of possible position exhibiting the highest overall cost (OVC); and optionally
rank the possible shapes of the new obstacle in relation to overall cost and discard a part of the possible shapes within the array of possible shapes exhibiting the highest overall cost (OVC); and/or

wherein in said method, step 6) of said method is followed by step 6a):

rank the possible positions and orientations of the new obstacle in relation to overall cost and discard a part of the possible positions or orientations within the array of possible position exhibiting the highest overall cost (OVC) and optionally;
rank the possible shapes of the new obstacle in relation to overall cost and discard a part of the possible shapes within the array of possible shapes exhibiting the highest overall cost (OVC).

13. A computer program product according to any of the claims 11 to 12, wherein in said method, independently those possible positions or orientations, as the case may be, which are discarded are those 40 - 90%, such as those 50 - 80%, such as 60 - 70% exhibiting the highest overall cost (OVC); and optionally wherein in said method, independently those possible positions or orientations, as the case may be, which are discarded are those possible shapes of the new obstacle, which are those 40 - 90%, such as those 50 - 80%, such as 60 - 70% exhibiting the highest overall cost (OVC).

14. A computer program product according to any of the preceding claims, wherein in said method, said determination of an optimized position and orientation of placement, and optionally also the shape, of a new obstacle is based on minimizing total operational time when working the field; total productive time for working the field; total fuel consumption for working the field; total non-working distance for working the field; total area covered twice or more.

15. Use of a computer program product according to any of the claims 1 - 14 for optimizing the position and orientation of placement, and optionally also the shape of a new obstacle in an agricultural field.


**Patentansprüche**

1. Computerprogrammprodukt, das, wenn es in einen Computer geladen oder darauf betrieben wird, angepasst ist, um ein Verfahren auszuführen zum Bestimmen einer optimierten Position und Ausrichtung der Platzierung und optional auch der Form eines neuen Hindernisses auf einem landwirtschaftlichen Feld; wobei das Verfahren folgende Schritte umfasst:

a) Bereitstellen von Informationen in Bezug auf:

i) Koordinaten in Bezug auf die Grenzen des landwirtschaftlichen Feldes; und
ii) Koordinaten in Bezug auf die Grenzen der Grundform des auf dem Feld auszulegenden neuen Hindernisses;

b) Bereitstellen von Informationen in Bezug auf einen oder mehrere Kapazitätsparameter in Bezug auf ein konkretes Arbeitsfahrzeug, das zum Bearbeiten des Feldes vorgesehen ist;
c) optional Bereitstellen von Informationen in Bezug auf die direkten Kosten des Platzierens des neuen Hindernisses, abhängig von der konkreten Position der Platzierung davon;
d) Ausführen einer Berechnung einer optimierten Position und Ausrichtung der Platzierung des neuen Hindernisses; wobei die optimierte Position und Ausrichtung der Platzierung und optional auch die Form des neuen Hindernisses auf der Grundlage der in Schritt a) und Schritt b) und Schritt c) erhaltenen Informationen berechnet werden.

2. Computerprogrammprodukt nach Anspruch 1, wobei in dem Verfahren Schritt a) weiter Bereitstellen von Informationen in Bezug auf Folgendes umfasst:

iii) Koordinaten in Bezug auf die Position von einem oder mehreren Ein-/Ausfahrtstoren, die an der Grenze des Feldes gelegen sind; und/oder

iv) Koordinaten in Bezug auf die Grenzen von mehreren oder mehreren Hindernissen, die innerhalb des landwirtschaftlichen Feldes bereits vorhanden sind.

3. Computerprogrammprodukt nach Anspruch 1 oder 2, wobei in dem Verfahren die Kapazitätsparameter von Schritt b) unabhängig eines oder mehreres des Nachstehenden umfassen: effektive Arbeitsbreite eines repräsentativen Arbeitsfahrzeugs oder Werkzeugs, Mindestwenderadius eines repräsentativen Arbeitsfahrzeugs, Kraftstoffverbrauch des Arbeitsfahrzeugs oder Werkzeugs.

4. Computerprogrammprodukt nach einem der vorstehenden Ansprüche, wobei das Verfahren den Vorschlag einer Matrix von möglichen Positionen und Ausrichtungen der Platzierung und optional auch den Vorschlag einer Matrix von möglichen Formen des neuen Hindernisses einschließt, und wobei Schritt d) in Bezug auf jede mögliche Position und Ausrichtung der Platzierung und optional auch in Bezug auf jede solche Form des neuen Hindernisses Berechnen von Gesamtkosten (OVC) für die Platzierung des neuen Hindernisses an der konkreten Position und Ausrichtung der Platzierung und mit der konkreten Form einschließt, wobei die optimierte Position und Ausrichtung der Platzierung und optional auch die Form des Hindernisses als die konkrete Position und Ausrichtung der Platzierung und optional auch die Form des neuen Hindernisses definiert ist, die die geringsten Gesamtkosten aufweist.

5. Computerprogrammprodukt nach Anspruch 4, wobei in dem Verfahren die Kosten für die Platzierung des neuen Hindernisses an der konkreten Position der Platzierung definiert sind als:

$$OVC = DC_P + OC_P - OC_0; \text{ oder als } OVC = OC_P - OC_0$$

- wobei OVC die Gesamtkosten sind; und
$DC_P$ die direkten Kosten für die Platzierung des neuen Hindernisses an der konkreten Position sind; und
$OC_P$ die Betriebskosten zum Bearbeiten des Feldes sind, wenn das neue Hindernis an der konkreten Position der Platzierung positioniert ist; und
$OC_0$ die Betriebskosten zum Bearbeiten des Feldes vor, oder ohne dass das neue Hindernis an der konkreten Position der Platzierung positioniert ist, sind.

6. Computerprogrammprodukt nach Anspruch 5, wobei in dem Verfahren $OC_P$ und/oder $OC_0$ unabhängig ermittelt werden durch Definieren einer Matrix von möglichen Arbeitswegen, denen das Fahrzeug zu folgen hat, und Berechnen in Bezug auf jeden möglichen Arbeitsweg der Matrix eines Effizienzparameters in Bezug in Bezug auf jeden möglichen Arbeitsweg, wobei $OC_P$ und/oder $OC_0$ unabhängig definiert sind als der konkrete Arbeitsweg der Matrix von möglichen Arbeitsweg, der die höchste Effizienz aufweist.

7. Computerprogrammprodukt nach Anspruch 6, wobei in dem Verfahren $OC_P$ und/oder $OC_0$ unabhängig durch folgende Schritte ermittelt werden:

i) Annähern der Grenze des Feldes an ein Grenzpolygon; und Annähern der Grenze der Grundform des neuen auf dem Feld zu platzierenden Hindernisses an ein Polygon neuer Hindernisse; und durch Annähern der Grenze von bereits vorhandenen Hindernissen, die auf dem Feld gelegen sind, an ein Polygon vorhandener Hindernisse;
ii) Definieren von einem oder mehreren Rainen, die unmittelbar innerhalb des Grenzpolygons gelegen sind;
iii) Definieren von einem oder mehreren Rainen, die ein Polygon vorhandener Hindernisse, falls vorhanden, umgeben;
iv) Definieren eines Rains, der das Polygon neuer Hindernisse, falls vorhanden, umgibt;
v) Definieren einer Arbeitsfläche, die alle Flächen des Feldes umfasst, die nicht zu einem Rain oder einem Hindernis gehören;
vi) Definieren einer Matrix von möglichen Arbeitsreihenausrichtungen, wobei jede mögliche Arbeitsreihenausrichtung parallel zu der Ausrichtung eines Rains ist;
vii) innerhalb der Arbeitsfläche und in Bezug auf jede Arbeitsreihenausrichtung innerhalb der Matrix von möglichen Arbeitsreihenausrichtungen, Definieren einer Matrix von parallelen Arbeitsreihen;
viii) in Bezug auf jede Matrix von parallel Arbeitsreihen, Konstruieren einer Matrix von möglichen zusammenhängenden Arbeitswegen durch Verbinden von Arbeitsreihen mit Rainen oder einem Teil eines Rains, wobei jeder der möglichen zusammenhängenden Arbeitsweg alle Arbeitsflächen und alle Raine abdeckt;
ix) in Bezug auf die in Schritt viii) ermittelten zusammenhängenden Arbeitswege, Berechnen eines Effizienzparameters, der die Effizienz ausdrückt, wenn dem konkreten zusammenhängenden Arbeitsweg gefolgt wird;
x) Definieren als $OC_P$ und/oder $OC_0$ des konkreten zusammenhängenden Arbeitswegs, der die höchste Effizienz aufweist.

8. Computerprogrammprodukt nach Anspruch 7, wobei in dem Verfahren in Schritt iii) der Rain eine Sicherheitsversatzfläche einschließt; und/oder wobei unabhängig in Schritt iv) der Rain eine Sicherheitsversatzfläche einschließt.

9. Computerprogrammprodukt nach einem der Ansprüche 5-8 wobei in dem Verfahren das Vorschlagen einer Matrix von möglichen Positionen der Platzierung des neuen Hindernisses folgende Schritte einschließt:

   1) Definieren eines rechteckigen Begrenzungsrahmens, der eine Breiten- und Höhenmagnitude aufweist, die an das neue auf dem Feld zu platzierende Hindernis so angepasst ist, dass das Hindernis alle vier Seiten des Begrenzungsrahmens berührt;
   2) Definieren eines das landwirtschaftliche Feld überlagernden Zellenrasters;
   3) Verwerfen aus dem Raster von allen Zellen, die teilweise oder vollständig außerhalb der Grenze des landwirtschaftlichen Feldes liegen, sodass nur die Zellen verbleiben, die vollständig innerhalb der Grenze des landwirtschaftlichen Feldes gelegen sind; und somit Definieren einer Matrix von möglichen Positionen des neuen auf dem Feld zu platzierenden Hindernisses; wobei jede verbleibende Zelle eine solche mögliche Position definiert.
   4) in Bezug auf jede mögliche Position in der erhaltenen Matrix von möglichen Positionen und optional in Bezug auf jede mögliche Form des Hindernisses in der Matrix von möglichen Formen, Berechnen der Gesamtkosten (OVC) für das Platzieren des neuen Hindernisses an der konkreten möglichen Position und mit der konkreten Form;
   5) in Bezug auf jede mögliche Position des neuen Hindernisses in der Matrix von möglichen Positionen, Verändern der Position oder Ausrichtung und optional auch der Form des Hindernisses, um eine neue Matrix von möglichen Positionen und Ausrichtungen und optional der Form des neuen Hindernisses zu erhalten;
   6) in Bezug auf jede mögliche Position oder Ausrichtung in der neuen Matrix von möglichen Positionen oder Ausrichtungen und optional auch in Bezug auf die Form des neuen Hindernisses, wie in Schritt 5) definiert, Berechnen der Gesamtkosten (OVC) für das Platzieren des neuen Hindernisses an der konkreten möglichen Position oder Ausrichtung;
   7) iteratives Widerholen der Schritte 4), 5) und 6);
   8) Definieren als optimierte Platzierung und Ausrichtung und optional auch Form des neuen Hindernisses der Platzierung und Ausrichtung und optional der Form, die die geringsten Gesamtkosten (OVC) aufweisen.

10. Computerprogrammprodukt nach Anspruch 9, wobei in dem Verfahren jede Zelle des Zellenrasters eine Breite und eine Höhe aufweist, die der jeweiligen Breite und Höhe des Begrenzungsrahmens entspricht.

11. Computerprogrammprodukt nach Anspruch 9 oder 10, wobei in dem Verfahren die Veränderung der Position oder Ausrichtung, wie in Schritt 5) definiert, ausgewählt wird aus der Gruppe, umfassend:

   - eine translatorische Bewegung des neuen Hindernisses in eine Richtung parallel zu der Breite des Begrenzungsrahmens in eine Richtung;
   - eine translatorische Bewegung des neuen Hindernisses in eine Richtung parallel zu der Breite des Begrenzungsrahmens in die entgegengesetzte Richtung;
   - eine translatorische Bewegung des neuen Hindernisses in eine Richtung parallel zu der Höhe des Begrenzungsrahmens in eine Richtung;
   - eine translatorische Bewegung des neuen Hindernisses in eine Richtung parallel zu der Höhe des Begrenzungsrahmens in die entgegengesetzte Richtung;
   - eine Rotation des neuen Hindernisses in eine Richtung;
   - eine Rotation des neuen Hindernisses in die entgegengesetzte Richtung.

12. Computerprogrammprodukt nach einem der Ansprüche 9-11, wobei in dem Verfahren auf Schritt 5) des Verfahrens Schritt 5a) folgt:

   wenn der einer veränderten möglichen Position oder Ausrichtung des neuen Hindernisses entsprechende Begrenzungsrahmen teilweise oder vollständig außerhalb der Grenze des landwirtschaftlichen Feldes angeordnet ist, wird die veränderte mögliche Position oder Ausrichtung des neuen Hindernisses verworfen; und/oder wobei in dem Verfahren auf Schritt 4) des Verfahrens Schritt 4a) folgt:

Ordnen der möglichen Positionen des neuen Hindernisses in Bezug auf die Gesamtkosten und Verwerfen eines Teils der möglichen Positionen innerhalb der Matrix von möglichen Position, der die höchsten Gesamtkosten (OVC) aufweist; und optional

Ordnen der möglichen Formen des neuen Hindernisses in Bezug auf die Gesamtkosten und Verwerfen eines Teils der möglichen Formen innerhalb der Matrix von möglichen Formen, der die höchsten Gesamtkosten (OVC) aufweist; und/oder

wobei in dem Verfahren auf Schritt 6) des Verfahrens Schritt 6a) folgt:

Ordnen der möglichen Positionen und Ausrichtungen des neuen Hindernisses in Bezug auf die Gesamtkosten und Verwerfen eines Teils der möglichen Positionen oder Ausrichtungen innerhalb der Matrix von möglichen Position, der die höchsten Gesamtkosten (OVC) aufweist, und optional;

Ordnen der möglichen Formen des neuen Hindernisses in Bezug auf die Gesamtkosten und Verwerfen eines Teils der möglichen Formen innerhalb der Matrix von möglichen Formen, der die höchsten Gesamtkosten (OVC) aufweist.

**13.** Computerprogrammprodukt nach einem der Ansprüche 11 bis 12, wobei in dem Verfahren unabhängig jeweils diejenigen möglichen Positionen oder Ausrichtungen, die verworfen werden, die 40 - 90 %, sowie die 50 - 80 %, sowie 60 - 70 % sind, die die höchsten Gesamtkosten (OVC) aufweisen; und wobei optional in dem Verfahren unabhängig jeweils die möglichen Positionen oder Ausrichtungen, die verworfen werden, jene möglichen Formen des neuen Hindernisses sind, die die 40-90%, sowie jene 50 - 80 %, sowie 60 - 70 % sind, die die höchsten Gesamtkosten (OVC) aufweisen.

**14.** Computerprogrammprodukt nach einem der vorstehenden Ansprüche, wobei in dem Verfahren das Bestimmen einer optimierten Position und Ausrichtung der Platzierung und optional auch der Form eines neuen Hindernisses auf Minimieren der Gesamtbetriebszeit zum Bearbeiten des Feldes; der gesamten produktiven Zeit zum Bearbeiten des Feldes; des gesamten Kraftstoffverbrauch zum Bearbeiten des Feldes; der gesamten Entfernung ohne zu arbeiten zum Bearbeiten des Feldes; der gesamten zweimal oder öfter abgedeckten Fläche beruht.

**15.** Verwenden eines Computerprogrammprodukts nach einem der Ansprüche 1 - 14 zum Optimieren der Position und Ausrichtung der Platzierung und optional auch der Form eines neuen Hindernisses auf einem landwirtschaftlichen Feld.

## Revendications

**1.** Produit de programme informatique, qui lorsqu'il est chargé ou fonctionne sur un ordinateur, est adapté pour exécuter un procédé de détermination d'une position et d'une orientation de mise en place optimisées, et facultativement aussi la forme d'un nouvel obstacle dans un champ agricole ; ledit procédé comprenant les étapes consistant à :

a) fournir des informations relatives à :

i) des coordonnées relatives aux limites dudit champ agricole ; et
ii) des coordonnées relatives aux limites de la forme au sol dudit nouvel obstacle à poser dans ledit champ ;

b) fournir des informations relatives à un ou plusieurs paramètres de capacité relatifs à un véhicule de travail spécifique destiné à travailler ledit champ ;
c) fournir facultativement des informations relatives au coût direct de la mise en place dudit nouvel obstacle, en fonction de la position de mise en place spécifique de celui-ci ;
d) réaliser un calcul d'une position et d'une orientation optimisées de mise en place dudit nouvel obstacle ; dans lequel lesdites position et orientation optimisées de mise en place, et facultativement également la forme dudit nouvel obstacle, sont calculées sur la base desdites informations récupérées à l'étape a) et à l'étape b) et à l'étape c).

**2.** Produit de programme informatique selon la revendication 1, dans lequel dans ledit procédé, l'étape a) comprend en outre la fourniture d'informations relatives à :

iii) des coordonnées relatives à la position d'une ou plusieurs portes d'entrée/sortie situées à ladite limite dudit champ ; et/ou

iv) des coordonnées relatives aux limites de plus ou plus d'obstacles déjà présents à l'intérieur dudit champ agricole.

3. Produit de programme informatique selon la revendication 1 ou 2, dans lequel dans ledit procédé, les paramètres de capacité de l'étape b) comprennent indépendamment un ou plusieurs des éléments suivants : largeur de travail effective d'un véhicule ou équipement de travail représentatif, rayon de braquage minimum d'un véhicule de travail représentatif, consommation de carburant dudit véhicule ou équipement de travail.

4. Produit de programme informatique selon l'une quelconque des revendications précédentes, dans lequel ledit procédé implique une suggestion d'un réseau de positions et d'orientations de mise en place possibles et facultativement également une suggestion d'un réseau de formes possibles dudit nouvel obstacle, et dans lequel l'étape d) implique de calculer, par rapport à chaque position et orientation de mise en place possible, et facultativement également par rapport à chaque telle forme dudit nouvel obstacle, un coût global (OVC) pour mettre en place ledit nouvel obstacle dans lesdites position et orientation de mise en place spécifiques, et d'avoir cette forme spécifique, dans lequel lesdites position et orientation optimisées de mise en place, et facultativement aussi la forme dudit obstacle sont définies comme cette position et cette orientation spécifiques de mise en place, et facultativement également la forme dudit nouvel obstacle qui présentent le coût global le plus bas.

5. Produit de programme informatique selon la revendication 4, dans lequel dans ledit procédé, ledit coût de mise en place dudit nouvel obstacle dans ladite position de mise en place spécifique est défini comme :

$$OVC = DC_P + OC_P\text{-}OC_0 \text{ ; ou comme } OVC = OC_P\text{-}OC_0$$

- dans lequel OVC est le coût global ; et
$DC_P$ étant le coût direct de mise en place dudit nouvel obstacle dans ladite position spécifique ; et
$OC_P$ étant le coût opérationnel de travail du champ avec le nouvel obstacle positionné dans cette position de mise en place spécifique ; et
$OC_0$ étant le coût opérationnel de travail du champ avant ou sans que le nouvel obstacle soit positionné dans cette position spécifique de mise en place.

6. Produit de programme informatique selon la revendication 5, dans lequel dans ledit procédé, $OC_P$ et/ou $OC_0$ sont trouvés indépendamment en définissant un réseau de trajets de travail possibles à suivre pour le véhicule et en calculant par rapport à chaque trajet de travail possible dudit réseau, un paramètre d'efficacité par rapport par rapport à chacun desdits trajets de travail possibles, dans lequel $OC_P$ et/ou $OC_0$ sont définis indépendamment comme ce trajet de travail spécifique, du réseau de trajet de travail possible, présentant l'efficacité la plus élevée.

7. Produit de programme informatique selon la revendication 6, dans lequel dans ledit procédé, $OC_P$ et/ou $OC_0$ sont trouvés indépendamment par les étapes suivantes :

i) approcher la limite du champ à un polygone de limite ; et approcher la limite de la forme au sol du nouvel obstacle devant être mis en place dans ledit champ avec un polygone de nouvel obstacle ; et en approchant la limite de tout obstacle existant déjà situé dans ledit champ avec un polygone d'obstacle existant ;
ii) définir une ou plusieurs tournières situées immédiatement à l'intérieur dudit polygone de limite ;
iii) définir une ou plusieurs tournières entourant tout polygone d'obstacle existant, le cas échéant ;
iv) définir une tournière entourant ledit polygone de nouvel obstacle, le cas échéant;
v) définir une zone de travail qui comprend toute zone du champ qui n'appartient pas à une tournière ou à un obstacle ;
vi) définir un réseau d'orientations de ligne de travail possibles, chaque orientation de ligne de travail possible étant parallèle à l'orientation d'une tournière ;
vii) dans la zone de travail et par rapport à chaque orientation de ligne de travail dans le réseau d'orientations de ligne de travail possibles, définir un réseau de lignes de travail parallèles ;
viii) par rapport à chaque réseau de rangées de travail parallèles, construire un réseau de trajets de travail continus possibles en reliant des rangées de travail avec des tournières ou une partie de tournière, chacun desdits trajets de travail continus possibles couvrant toute la zone de travail et tous les tournières ;
ix) par rapport aux trajets de travail continus trouvés à l'étape viii), calculer un paramètre d'efficacité, exprimant l'efficacité en suivant ce trajet de travail continu spécifique ;

x) définir comme $OC_P$ et/ou $OC_0$ ce trajet de travail continu spécifique présentant l'efficacité la plus élevée.

8. Produit de programme informatique selon la revendication 7, dans lequel dans ledit procédé, à l'étape iii), la tournière inclut une zone de décalage de sécurité ; et/ou indépendamment dans lequel à l'étape iv), la tournière inclut une zone de décalage de sécurité.

9. Produit de programme informatique selon l'une quelconque des revendications 5-8, dans lequel dans ledit procédé, la suggestion d'un réseau de positions possibles de mise en place dudit nouvel obstacle implique les étapes suivantes :

   1) définir un cadre de délimitation rectangulaire ayant une amplitude de largeur et une hauteur adaptées audit nouvel obstacle devant être mis en place sur ledit champ de telle sorte que ledit obstacle touche les quatre côtés dudit cadre de délimitation ;
   2) définir une grille de cellules recouvrant ledit champ agricole ;
   3) écarter de la grille toute cellule qui est partiellement ou complètement à l'extérieur de la limite dudit champ agricole, en laissant ainsi derrière uniquement ces cellules situées entièrement à l'intérieur de la limite dudit champ agricole ; et définir ainsi un réseau de positions possibles dudit nouvel obstacle devant être mis en place dans ledit champ ; chaque cellule restante définit une telle position possible.
   4) par rapport à chaque position possible dans le réseau de positions possibles obtenu, et facultativement par rapport à chaque forme possible de l'obstacle dans le réseau de formes possibles, calculer le coût global (OVC) pour mettre en place ledit nouvel obstacle dans cette position possible spécifique, et ayant cette forme spécifique ;
   5) par rapport à chaque position possible du nouvel obstacle dans le tableau de positions possibles, modifier la position ou l'orientation, et facultativement également la forme dudit obstacle de manière à obtenir un nouveau réseau de positions et orientations possibles, et facultativement la forme du nouvel obstacle ;
   6) par rapport à chaque position ou orientation possible dans le nouveau réseau de positions ou orientations possibles, et facultativement également par rapport à la forme du nouvel obstacle, telle que définie à l'étape 5), calculer le coût global (OVC) pour mettre en place ledit nouvel obstacle dans cette position ou orientation possible spécifique ;
   7) répéter les étapes 4), 5) et 6) de manière itérative ;
   8) définir comme la mise en place et l'orientation optimisées, et facultativement également comme forme du nouvel obstacle, cette mise en place et cette orientation, et facultativement cette forme présentant le coût global le plus bas (OVC).

10. Produit de programme informatique selon la revendication 9, dans lequel dans ledit procédé, chaque cellule de la grille de cellules a une largeur et une hauteur correspondant respectivement à la largeur et à la hauteur dudit cadre de délimitation.

11. Produit de programme informatique selon la revendication 9 ou 10 dans lequel dans ledit procédé, la modification de la position ou de l'orientation telle que définie à l'étape 5) est choisie dans le groupe comprenant :

   - un mouvement de translation du nouvel obstacle dans une direction parallèle à la largeur du cadre de délimitation dans une première direction ;
   - un mouvement de translation du nouvel obstacle dans une direction parallèle à la largeur du cadre de délimitation dans la direction opposée ;
   - un mouvement de translation du nouvel obstacle dans une direction parallèle à la hauteur du cadre de délimitation dans une première direction ;
   - un mouvement de translation du nouvel obstacle dans une direction parallèle à la hauteur du cadre de délimitation dans la direction opposée ;
   - une rotation du nouvel obstacle dans une première direction ;
   - une rotation du nouvel obstacle dans la direction opposée.

12. Produit de programme informatique selon l'une quelconque des revendications 9-11, dans lequel dans ledit procédé, l'étape 5) dudit procédé est suivie de l'étape 5a) :

   dans un cas où un cadre de délimitation correspondant à une position ou une orientation possible modifiée dudit nouvel obstacle est agencé partiellement ou complètement à l'extérieur de la limite dudit champ agricole, ladite position ou orientation possible modifiée dudit nouvel obstacle est écartée ; et/ou

dans lequel dans ledit procédé, l'étape 4) dudit procédé est suivie de l'étape 4a) consistant à :

> classer les positions possibles du nouvel obstacle par rapport au coût global et écarter une partie des positions possibles dans le réseau de positions possibles présentant le coût global le plus élevé (OVC) ; et facultativement
> classer les formes possibles du nouvel obstacle par rapport au coût global et écarter une partie des formes possibles dans le réseau de formes possibles présentant le coût global le plus élevé (OVC) ; et/ou

dans lequel dans ledit procédé, l'étape 6) dudit procédé est suivie par l'étape 6a) consistant à :

> classer les positions et orientations possibles du nouvel obstacle par rapport au coût global et écarter une partie des positions ou orientations possibles dans le réseau de positions possibles présentant le coût global le plus élevé (OVC) et facultativement ;
> classer les formes possibles du nouvel obstacle par rapport au coût global et écarter une partie des formes possibles dans le réseau de formes possibles présentant le coût global le plus élevé (OVC).

13. Produit de programme informatique selon l'une quelconque des revendications 11 à 12, dans lequel dans ledit procédé, indépendamment, ces positions ou orientations possibles, selon le cas, qui sont écartées sont celles de 40 à 90 %, telles que celles de 50 à 80 %, comme 60 à 70 % présentant le coût global le plus élevé (OVC) ; et facultativement dans lequel dans ledit procédé, indépendamment, ces positions ou orientations possibles, selon le cas, qui sont écartées sont ces formes possibles du nouvel obstacle, qui sont celles de 40 à 90 %, telles que celles de 50 à 80 %, telles que 60 à 70 % présentant le coût global le plus élevé (OVC).

14. Produit de programme informatique selon l'une quelconque des revendications précédentes, dans lequel dans ledit procédé, ladite détermination d'une position et d'une orientation de mise en place optimisées, et facultativement également de la forme, d'un nouvel obstacle est basée sur une minimisation du temps de fonctionnement total lors du travail du champ ; du temps productif total pour travailler sur le terrain ; de la consommation de carburant totale pour travailler le terrain ; de la distance totale sans travail pour travailler le terrain ; de la superficie totale couverte deux fois ou plus.

15. Utilisation d'un produit de programme informatique selon l'une quelconque des revendications 1-14 pour optimiser la position et l'orientation de mise en place, et facultativement également la forme d'un nouvel obstacle dans un champ agricole.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19    a

Fig. 19    b

Fig. 19  C

Fig. 20

Fig. 21a

Fig. 21b

Fig. 21c

Fig. 21d

Fig. 22

Fig. 23

Fig. 24

Fig. 25

A

B

C

D

Fig. 26

Fig. 27

Fig. 28

```
┌─────────────────────┐        ◇ Do the gridlines ◇         ┌─────────────────────┐
│ Create grid over the│       ◇  intersect the edge of ◇ YES │ Do not identify Ob  │
│ field (gridlines     │─────▶◇   boundary or existing   ◇──▶│ position            │
│ based on obstacle    │       ◇  obstacle?            ◇      │                     │
│ (Ob) size)          │        ◇                     ◇       └─────────────────────┘
└─────────────────────┘          │ NO

┌─────────────────────┐        ┌─────────────────────┐      ┌─────────────────────┐
│ Calculate Ob direct │        │ Identify Ob positions│      │ Define headlands    │
│ placement cost at    │◀──────│ in field            │─────▶│ around edges with   │
│ position            │        │                     │      │ field boundaries and│
│                     │        │                     │      │ existing and new Ob │
└─────────────────────┘        └─────────────────────┘      └─────────────────────┘

┌─────────────────────┐        ┌─────────────────────┐      ┌─────────────────────┐
│                     │        │ Calculate cost of   │      │ Calculate optimised │
│ Calculate overall   │◀──────│ operational cost of │◀─────│ driving direction   │
│ costs               │        │ driving route       │      │ and define working  │
│                     │        │                     │      │ rows                │
└─────────────────────┘        └─────────────────────┘      └─────────────────────┘

┌─────────────────────┐        ┌─────────────────────┐      ┌─────────────────────┐
│ Compare costs and   │        │ Store Ob with top   │      │ Calculate optimised │
│ create sub-group of │───────▶│ 13% lowest costs    │      │ driving route       │
│ top 13% with lowest │        │                     │      │                     │
│ costs (solution ≥ 1)│        │                     │      │                     │
└─────────────────────┘        └─────────────────────┘      └─────────────────────┘

┌─────────────────────┐        ◇ Is the best (minimal)◇ YES  ┌─────────────────────┐
│ Reset the number of │       ◇  cost lower than the  ◇─────▶│ Store best placement│
│ iterations since an │◀──────◇  stored cost?        ◇       │ cost                │
│ improvement to zero │        ◇                     ◇       └─────────────────────┘
│ and store cost      │          │ NO
└─────────────────────┘

┌─────────────────────┐        ◇ Are the costs        ◇ NO   ┌─────────────────────┐
│ Modify Ob positions │  YES   ◇  of the new sub-group ◇────▶│ Increment the number│
│ by moving 10% ↔ & ↕,│◀──────◇  lower than the stored ◇     │ of iterations since │
│ and rotation anti-  │        ◇  costs?              ◇       │ an improvement      │
│ & clockwise)        │        ◇                     ◇       └─────────────────────┘
└─────────────────────┘

┌─────────────────────┐        ┌─────────────────────┐      ◇ Is number of        ◇
│ Eliminate positions │        │                     │ YES  ◇  iterations bigger   ◇
│ where Ob interacts  │        │ FINISH PROCESS      │◀─────◇  than the limit?     ◇
│ with a boundary     │        │                     │      ◇                     ◇
└─────────────────────┘        └─────────────────────┘        │ NO
```

Fig. 29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120101725 A1
- US 20140324345 A1
- US 20050273253 A1
- US 5987382 A